# EUROPÄISCHE PATENTSCHRIFT

(11) **EP 1 946 340 B1**
(45) Veröffentlichungstag und Bekanntmachung des Hinweises auf die Patenterteilung: **28.12.2016**
(21) Anmeldenummer: 06805505.2
(22) Anmeldetag: 10.11.2006
(51) Int. Cl.: H01G 4/012, H01G 4/30, H01G 4/38, H01C 7/10

(54) **ELEKTRISCHES VIELSCHICHTBAUELEMENT MIT SPEZIELLER FORM DER ELEKTRODEN ZUR REDUZIERUNG DER FERTIGUNGSSTREUUNG DER KAPAZITÄT**
ELECTRICAL MULTILAYER COMPONENT HAVING A SPECIAL ELECTRODE SHAPE FOR REDUCING THE CAPACITANCE MANUFACTURING TOLERANCE
COMPOSANT ÉLECTRIQUE MULTICOUCHE AVEC UNE FORME D ÉLECTRODES SPÉCIALE POUR LA RÉDUCTION DE LA DISPERSION À LA FABRICATION DE LA CAPACITÉ

(30) Priorität: 11.11.2005 DE 102005053941; 22.03.2006 DE 102006013227
(43) Veröffentlichungstag der Anmeldung: 23.07.2008
(73) Patentinhaber: EPCOS AG, 81669 München (DE)
(72) Erfinder: HÖLBLING, Thomas, A-8010 Graz (AT); FEICHTINGER, Thomas, A-8010 Graz (AT); ORTNER, Markus, A-8521 Wettmannstätten (AT)
(74) Vertreter: Epping - Hermann - Fischer
(86) Internationale Anmeldenummer: PCT/DE2006/001971
(87) Internationale Veröffentlichungsnummer: WO 2007/054082

(56) Entgegenhaltungen:
- EP-A- 1 560 235
- WO-A-02/052614
- US-A1- 2004 070 919

## Beschreibung

Es wird ein elektrisches Vielschichtbauelement mit Innenelektroden beschrieben.

Aus der Druckschrift DE 102 35 011 A1 ist ein elektrisches Vielschichtbauelement bekannt, wobei mehrere Vielschichtkondensatoren mit einem Spalt zwischen den Elektroden in einem Grundkörper integriert sind.

In EP 0 386 821 B1 ist ein Vielschichtkondensator beschrieben, bei dem eine innere Elektrode und eine zugehörige Gegenelektrode je ein Fenster aufweisen. Damit soll erreicht werden, dass die Kapazität weitgehend unabhängig von herstellungsbedingten geringfügigen Verschiebungen der Elektroden relativ zueinander ist. Die Fenster sind nur im Bereich der dem Anschlusskontakt der Elektrode nächstliegenden Kante der jeweiligen Gegenelektrode vorhanden. Ein Mittelsteg kann in den Fenstern vorhanden sein, um eine Verbindung mit den äußeren Anschlusskontakten zusätzlich zu den seitlichen Stegen herzustellen.

Eine zu lösende Aufgabe besteht darin, ein elektrisches Vielschichtbauelement zu schaffen, dessen elektrische Kennwerte innerhalb enger Toleranzen einstellbar sind.

Diese Aufgabe wird mit dem elektrischen Vielschichtbauelement mit den Merkmalen des Anspruchs 1 und mit dem elektrischen Vielschichtbauelementmodul mit den Merkmalen des Anspruchs 14 gelöst. Ausgestaltungen ergeben sich aus den abhängigen Ansprüchen.

Es wird ein elektrisches Vielschichtbauelement mit mehreren Innenelektroden angegeben, bei dem wenigstens eine Innenelektrode eine Querbegrenzung aufweist, die sich in orthogonaler Projektion in einer Aussparung einer benachbarten Innenelektrode befindet.

Innenelektroden überlappen einander und bilden zusammen mit einem Dielektrikum kapazitiv wirksame Bereiche. Benachbarte Innenelektroden befinden sich auf unterschiedlichen Ebenen des elektrischen Vielschichtbauelements.

Mit dem Begriff Querbegrenzung wird eine Grenze verstanden, die zwischen einem elektrisch leitfähigen Bereich einer Innenelektrode und einem elektrisch nicht leitfähigen Bereich des elektrischen Vielschichtbauelements verläuft.

Der elektrisch nicht leitfähige Bereich des Vielschichtbauelements könnte beispielsweise eine Lücke bzw. eine Aussparung einer Innenelektrode sein, die mit dem Material einer dielektrischen Schicht oder einem sonstigen isolierenden Material gefüllt sein kann.

Der elektrisch nicht leitfähige Bereich des Vielschichtbauelements kann alternativ ein Bereich des elektrischen Bauelements sein, der keine Innenelektrode aufweist. Unter einer Querbegrenzung ist daher auch ein in bzw. auf einer keramischen Schicht liegendes freies Ende einer Innenelektrode zu verstehen. Dieses Ende könnte dabei an einen Bereich einer dielektrischen Schicht angrenzen, der sich zwischen der Innenelektrode und einem Außenkontakt des Vielschichtbauelements befindet. Das gegenüberliegende Ende bildet vorzugsweise einen elektrischen Kontakt zu einer Aussenelektrode.

Dadurch, dass sich eine Querbegrenzung einer Innenelektrode in orthogonaler Projektion in einer Aussparung einer benachbarten Innenelektrode befindet, überlappt auch ein sich neben der Querbegrenzung befindlicher elektrisch leitfähiger Bereich der Innenelektrode die mindestens eine Aussparung der benachbarten Innenelektrode, wobei durch die Überlappung ein kapazitiv unwirksamer Bereich erzeugbar ist. Der Bereich wird als nicht kapazitiv angesehen, da für einen Teil einer Innenelektrode keine unmittelbar benachbarte Gegenelektrode in orthogonaler Projektion vorhanden ist, sodass keine Kapazität erzeugt werden kann.

Die elektrischen Eigenschaften des elektrischen Bauelements werden von der gemeinsam gebildeten Überlappfläche zweier benachbarter Innenelektroden wesentlich beeinflusst. Die gemeinsam gebildete Überlappfläche zwischen zwei benachbarten Innenelektroden ist die Schnittmenge der Innenelektrodenflächen die sich orthogonal überlagern.

Der Einfluss der Überlappfläche auf die elektrischen Eigenschaften des elektrischen Vielschichtbauelements kann dadurch kontrolliert werden, dass mit Wirkung für die von der Überlappfläche betroffenen Innenelektroden zumindest ein kapazitiv nicht wirksamer Teilbereich vorhanden ist. Die Größe des kapazitiv unwirksamen Bereichs kann dabei durch eine fertigungsbedingte, relative laterale Verschiebung benachbarter Innenelektroden verändert werden.

Der kapazitiv unwirksame Teilbereich ist dabei so ausgebildet, dass er zunimmt mit einer Verschiebung der Innenelektroden zueinander, die eine Vergrößerung der Überlappfläche bewirkt, und dass er umgekehrt abnimmt mit einer solchen Verschiebung, die die Überlappfläche verringert. Somit führt beispielsweise eine relative laterale Verschiebung benachbarter Innenelektroden gleichzeitig zu einer Zunahme - bedingt durch die vergrößerte Gesamt-Überlappfläche - und einer Abnahme - bedingt durch die Zunahme des unwirksamen Bereichs - der durch die Innenelektroden gebildeten Kapazität, wodurch die elektrischen Kennwerte des Vielschichtbauelements konstant oder zumindest nahezu konstant gehalten werden können.

Vorteilhafterweise kann daher bis zu einem bestimmten Grad auf die Genauigkeit der Positionierung der Innenelektroden bei der Herstellung des Vielschichtbauelements verzichtet werden, wobei die elektrischen Kennwerte des Bauelements dennoch innerhalb enger Toleranzen gehalten werden können.

Durch die Möglichkeit, auf die äußerst hohe Präzisionsanforderung bei der Herstellung von elektrischen Bauelementen mit Innenelektroden weniger Rücksicht nehmen zu dürfen, können die Herstellungskosten des Vielschichtbauelements bzw. der Vielschichtbauelemente erheblich reduziert werden. Auch wird die Anzahl der aufgrund nicht eingehaltener elektrischer Toleranzen nicht mehr brauchbarer Vielschichtbauelemente verringert. Das führt vorteilhafterweise zur Reduzierung der Anzahl der zu produzierenden Vielschichtbauelemente und zu einer erheblichen Reduzierung des Zeitaufwandes bei der Herstellung der Vielschichtbauelemente.

Unter Verwendung einer Kondensatorkeramik für die zwischen den Innenelektroden liegenden Dielektrikumsschichten kann ein Kondensator geschaffen werden. Wenn zwischen mehreren Innenelektroden Kapazitäten bzw. überwiegend kapazitive Effekte gebildet sind, wird ein keramischer Vielschichtkondensator geschaffen.

Unter Verwendung einer Varistorkeramik für die zwischen den Innenelektroden liegenden Dielektrikumsschichten kann ein Varistor geschaffen werden. Wenn zwischen mehreren Innenelektroden ein Varistoreffekt erzeugbar ist, wird ein Vielschichtvaristor geschaffen.

Gemäß einer Ausführungsform des elektrischen Vielschichtbauelements kann unter Verwendung einer Varistorkeramik neben dem Varistoreffekt zudem eine zumindest kleine Kapazität zwischen Innenelektroden vorhanden sein, sodass der Varistoreffekt zusätzlich von einem kapazitiven Effekt begleitet wird. Der kapazitive Effekt kann zur Ausfilterung bestimmter hochfrequenter Signale, die dem Vielschichtbauelement zugeführt werden, verwendet werden. Dabei ist es günstig, wenn das Vielschichtbauelement zumindest eine Masseelektrode aufweist, die die Signale ableitet.

Es ist möglich, dass ein erster Teil des elektrischen Vielschichtbauelements einen Vielschichtkondensator umfasst und ein zweiter Teil des Vielschichtkondensators einen Vielschichtvaristor. Der Vielschichtkondensator und der Vielschichtvaristor können mittels einer zwischen ihnen liegenden Isolierschicht oder Masseelektrode voneinander entkoppelt bzw. abgeschirmt sein.

Gemäß einer Ausführungsform des elektrischen Vielschichtbauelements weist jede Innenelektrode mindestens eine Aussparung auf, wobei die zumindest eine Aussparung einer jeden Innenelektrode die mindestens eine Aussparung einer benachbarten Innenelektrode in orthogonaler Projektion überlappt.

Die Größe der gesamten Aussparungsfläche, die man bei einer orthogonalen Projektion der einen Aussparung auf die andere erhält, wird als effektive Aussparungsfläche bezeichnet und kann auch als Vereinigungsmenge der beiden übereinanderliegenden Aussparungen betrachtet werden.

Die maximale effektive Aussparungsfläche ist dann erreicht, wenn in orthogonaler Projektion zwei Aussparungen zumindest lückenlos aneinander angrenzen, sich aber nicht überlappen.

Der Maximalbetrag, um den die maximal gemeinsam gebildete effektive Aussparungsfläche durch laterales Verschieben einer der beiden Innenelektroden verringert werden kann, wird dann, wenn die Aussparungen unterschiedlich groß sind, durch die Fläche der kleineren Aussparung bestimmt. Wenn die Aussparungen gleich groß sind, wird die maximale gemeinsame Aussparungsfläche höchstens um die Fläche einer der beiden Aussparungen verringert.

Die minimale effektive Aussparungsfläche wird dann erreicht, wenn die Ränder der Aussparungen in orthogonaler Projektion deckungsgleich sind, welches der Fall sein kann wenn die Aussparungen gleich geformt und groß sind, oder wenn die Ränder der einen Aussparung sich in orthogonaler Projektion innerhalb der Ränder der zweiten Aussparung befinden.

Wenn sich die Aussparungen teilweise überlappen, dann ist die effektive Aussparungsfläche die Summe der Flächen minus der Schnittmenge der Aussparungen.

Sollte sich eine Innenelektrode gegenüber einer anderen, insbesondere gegenüber ihrer benachbarten Elektrode verschieben, kommt es je nach lateraler Richtung der Verschiebung zu folgenden Effekten:
a) Die von den Innenelektroden gemeinsam gebildete Überlappfläche wird überall dort, wo die Innenelektroden sich in orthogonaler Projektion überlagern, vergrößert, wobei gleichzeitig die effektive Aussparungsfläche, die sich durch orthogonale Überlagerung der Aussparungen ergibt, vergrößert wird. Die Zunahme der von den Innenelektroden gemeinsam gebildeten Überlappfläche und die damit einhergehende Änderung der elektrischen Eigenschaften des Bauelements wird also durch die gleichzeitige Zunahme der Größe der effektiven Aussparungsfläche neutralisiert.
b) Die von den Innenelektroden gemeinsamen gebildete Überlappfläche wird verkleinert, da die Innenelektroden sich weniger überlagern, wobei gleichzeitig die effektive Aussparungsfläche verkleinert wird. Die Abnahme der gemeinsamen Innenelektrodenfläche wird also gleichzeitig durch die Verkleinerung der effektiven Aussparungsfläche neutralisiert.

Gemäß einer anderen Ausführungsform des elektrischen Vielschichtbauelements weisen wenigstens einige der Innenelektroden je mindestens eine Aussparung auf, wobei jede Innenelektrode ein mit einem Außenkontakt kontaktierbares Ende und eine Querbegrenzung aufweist, wobei sich die Querbegrenzung einer jeden Innenelektrode in orthogonaler Projektion in einer Aussparung einer benachbarten Innenelektrode befindet.

Wenn die genannte Querbegrenzung der Innenelektrode sich nun beispielsweise während der Herstellung des Vielschichtbauelements ausgehend von einer Ideallage geringfügig in eine laterale Richtung verschoben hat, bewirkt diese Verschiebung nur eine geringe Änderung der elektrischen Eigenschaften des Vielschichtbauelements.

Die geringfügige Änderung der elektrischen Eigenschaften ist auf die orthogonale Überlagerung der Querbegrenzung der Innenelektrode mit dem Bereich der benachbarten Innenelektrode, der sich neben der Aussparung befindet, zurückzuführen. Ohne das Vorhandensein einer Aussparung würde die Zu- oder Abnahme der von den Innenelektroden gemeinsam aufgespannten Fläche durch die relative Verschiebung der Innenelektroden jedoch viel größer sein.

Gemäß einer alternativen Ausführungsform weist eine Innenelektrode eine Aussparung auf, die einer aussparungslosen Innenelektrode benachbart ist. Dabei weist jedoch die aussparungslose Innenelektrode eine Querbegrenzung in der Form eines Endes auf, das sich in orthogonaler Projektion in der Aussparung der benachbarten Innenelektrode befindet.

Gemäß einer weiteren Ausführungsform weist zumindest eine der Innenelektroden mehrere Aussparungen auf, sodass eine Kompensation von größeren, herstellungsbedingten Innenelektrodenversätzen erreicht werden kann, ohne dass eine Innenelektrode eine einzige große Aussparung aufweisen muss, die eine verringerte Stromtragfähigkeit der Innenelektrode zur Folge hätte. Unabhängig von der gesamten Anzahl der Aussparungen ist die Gesamtfläche der Aussparungen möglichst klein zu halten, um die Stromtragfähigkeit der Innenelektroden so wenig wie möglich einzuschränken.

Eine Mehrzahl von sich in orthogonaler Projektion überlappenden Aussparungen bietet gegenüber der Überlappung lediglich zweier benachbarter, größerer Aussparungen, den Vorteil, dass eine Mehrzahl von effektiven Aussparungsflächen geschaffen wird, deren Effekt auf die elektrischen Eigenschaften des Vielschichtbauelements sich addiert und so auch schon bei einer kleinen lateralen Verschiebung ein ausreichender Kompensationseffekt erzielt werden kann.

Es ist günstig, wenn die mindestens eine Aussparung ein Loch ist. Dabei wird ein rechteckiges Loch bevorzugt, da mit dessen Abmessungen leichter ein voraussehbarer Grad an möglicher Versatzkompensation ermittelt werden kann, als bei einem Loch mit einer anderen Form, bei der die Einschätzung über die gemeinsam gebildete Aussparungsfläche eine kompliziertere Berechnung benötigen würde.

An Stelle eines Lochs kann die Aussparung durch die Einbuchtung des Randes, insbesondere Seitenrandes, einer Innenelektrode ausgebildet sein, sodass die Innenelektrode hiermit einen verengten Bereich in der Form eines Stegs aufweist. Eine solche Aussparung wirkt als ein aus der Mitte an die Innenelektrodenrand versetztes Loch. Somit wird bevorzugt, dass eine Querbegrenzung einer Innenelektrode einen Steg einer benachbarten Innenelektrode in orthogonaler Projektion überlagert. Zudem kann jede mit einem Steg ausgebildete Innenelektrode auch eine weitere Aussparung aufweisen, die sich vorzugsweise in orthogonaler Projektion zumindest teilweise mit der Aussparung einer benachbarten Innenelektrode überlagert.

Ein verengter Bereich bzw. ein Steg einer Innenelektrode hat den Vorteil, dass eine relative Längsverschiebung gegenüber einer benachbarten Innenelektrode nur zu einer geringen Zu- und Abnahme der kapazitiv wirksamen Überlappfläche führt. Die Ab- oder Zunahme ergibt sich dabei aus dem Wert der Längsverschiebung multipliziert mit dem Wert der Breite des Stegs.

Gemäß einer weiteren Ausführungsform des elektrischen Bauelements weist eine Innenelektrode einen Steg bzw. eine Verjüngung der genannten Art auf, mit einer Breite, die der Breite eines Lochs derselben und/oder einer benachbarten Innenelektrode entspricht. Somit kann eine eventuelle Zunahme einer mit einer anderen Innenelektrode gebildeten Überlappfläche im Bereich des Stegs mit einer Zunahme der gemeinsamen Lochfläche der beiden Innenelektroden kompensiert werden.

Es wird bevorzugt, dass der neben einer Aussparung befindliche Bereich einer Innenelektrode jedoch ausreichend breit ist, um eine möglichst große Stromstragfähigkeit zu erlauben.

Gemäß einer Ausführungsform des elektrischen Vielschichtbauelements ist eine Innenelektrode entlang ihrer gesamten Länge breiter oder schmaler ausgeführt, als ihre benachbarte Innenelektrode. Dadurch wird eine Querversatzkompensation mit der gesamten Fläche beider Innenelektroden erreicht. Dies wird dadurch ermöglicht, dass sich die Seitenränder der weniger breiten Innenelektrode in orthogonaler Projektion stets innerhalb der Fläche einer benachbarten Innenelektrode befinden, und somit eine Ab- oder Zunahme der kapazitiv wirksamen Fläche erst dann zustande kommt, wenn ein Seitenrand der weniger breiten Innenelektrode sich in der Projektion nicht mehr innerhalb der Fläche der breiteren, benachbarten Innenelektrode befindet.

Es wird bevorzugt, dass die Innenelektroden zumindest an einem Ende mit einem auf den keramischen Grundkörper aufgebrachten Außenkontakt kontaktiert sind. Hierdurch ergibt sich eine besonders kompakte Ausführung des elektrischen Vielschichtbauelements.

Gemäß einer Ausführungsform des elektrischen Bauelements ist an je einer Seitenfläche des keramischen Grundkörpers ein Außenkontakt angeordnet. Der an einer Seitenfläche des Grundkörpers angeordnete Außenkontakt kann dabei mit einem anderen elektrischen Potential beaufschlagt sein, als der ihm gegenüber liegende Außenkontakt. Es kann sich dabei um einen Pluspol, einem Minuspol oder eine Masse handeln. Dabei ist es günstig, wenn eine Innenelektrode eines ersten elektrischen Potentials eine Kontaktierung an einer ersten Seitenfläche des Grundkörpers aufweist und eine Innenelektrode eines zweiten elektrischen Potentials eine Kontaktierung an einer zweiten Seitenfläche des Grundkörpers aufweist. Ein solches elektrisches Vielschichtbauelement bietet den Vorteil, von mehreren Seiten her kontaktiert werden zu können. Es ist also nicht mehr nötig, ein elektrisches Bauelement nur noch von gegenüberliegenden Seitenflächen, wie z.B. von beiden Stirnseiten, zu kontaktieren.

Gemäß einer Ausführungsform des elektrischen Bauelements ist eine Innenelektrode eines ersten Potentials kreuzförmig ausgebildet, wobei die Kontaktierung zumindest einer der vier Enden der Innenelektrode mit einem Außenkontakt verbunden ist. Eine kreuzförmige Innenelektrode weist vier Arme auf, die relativ zueinander rechtwinklig angeordnet sind. Es ist jedoch auch möglich, die kreuzförmige Innenelektrode über mehrere ihrer Arme mit mehreren Außenkontakten desselben elektrischen Potentials zu kontaktieren. Die Armen der kreuzförmigen Innenelektrode können zum Erreichen einer Querversatzkompensation unterschiedlich breit ausgeführt sein. Auch kann jeder Arm der kreuzförmigen Innenelektrode mit einer unterschiedlichen Anzahl von Querbegrenzungen ausgeführt sein.

Es wird bevorzugt, dass mindestens eine der Innenelektroden eine Masseelektrode ist. Damit wird die Abfuhr von ggf. parasitär im Grundkörper vorhandenen elektrischen Strömen bzw. Ladungen erleichtert. Auch kann die Masse als Bestandteil eines Filters, wie zum Beispiel zum Ableiten von hoch- oder höchstfrequenten Signalen, dienen. Die Masseelektrode kann ebenfalls Aussparungen aufweisen.

Es wird außerdem ein elektrisches Vielschichtbauelementmodul vorgeschlagen, das mehrere der hier beschriebenen elektrischen Vielschichtbauelemente umfasst, die nebeneinander in einem gemeinsamen keramischen Grundkörper angeordnet sind. Das Modul kann jedoch auch mehrere der hier beschriebenen Vielschichtbauelemente umfassen, die in separaten Grundkörpern angeordnet sind, jedoch eine gemeinsame Funktion aufweisen, wie zum Beispiel die eines Filters, und einen Teil eines einzigen Geräts bilden.

Ein solches Vielschichtbauelementmodul hat den Vorteil, dass zwischen den Vielschichtbauelementen aufgrund ihrer Längs- bzw. Querversatzinvarianten Innenelektrodenstapel Streuungen der elektrischen Eigenschaften äußerst gering sind. Somit können mittels des Moduls beispielsweise gleich mehrere Signale verarbeitet werden, wobei die Verarbeitung der Signale bei allen Vielschichtbauelementen zur gleichen Änderung der Signale bzw. zu keiner Verzerrung unter den Signalen führt.

Die Innenelektroden des Vielschichtbauelementmoduls können nach einer Ausführungsform mehrere separate Innenelektrodenstapel bilden, die jeweils mit auf den Grundkörper aufgebrachten Außenanschlüssen kontaktiert sind. Verschiedene Innenelektrodenstapel können mittels einer Isolierung voneinander elektrisch entkoppelt werden. Mittels einer gemeinsamen Masseelektrode kann jedoch eine elektrische Kopplung zwischen mehreren Innenelektrodenstapeln vorgenommen werden. Dabei befindet sich vorzugsweise ein Bereich der gemeinsamen Masseelektrode in einer Ebene eines ersten Innenelektrodenstapels und ein zweiter Bereich der gemeinsamen Masseelektrode in der gleichen Ebene eines weiteren Innenelektrodenstapels.

Es können im Grundkörper mehrere Innenelektroden in derselben Ebene mit je einem Außenkontakt vorhanden sein, wobei diese Innenelektroden einer anderen Innenelektrode (Gegenelektrode) mit einem anderen elektrischen Potential benachbart sind und mit ihr eine gemeinsame Überlappfläche bilden. Wenn die Innenelektroden abwechselnd mit der gemeinsamen Gegenelektrode gestapelt sind, ergibt sich eine Anzahl von Vielschichtbauelementen, die der Anzahl der in derselben Ebene liegenden Innenelektroden entspricht. Die gemeinsame Innenelektrode kann eine oder mehrere Aussparungen der genannten Art und/oder rahmenförmig oder kreuzförmig ausgebildet sein.

Die beschriebenen Gegenstände werden anhand der folgenden Figuren und Ausführungsbeispiele näher erläutert. Dabei zeigen:
- Figuren 1a bis 1c: schematische Bilder des relativen Längsversatzes einer Versatzfläche gegenüber einer Bezugsfläche,
- Figur 2a bis 2c: schematischer Bilder der relativen Längsversätze einer Versatzfläche und einer Bezugsfläche mit jeweils im Vergleich zu den vorherigen Figuren größeren Flächen,
- Figur 3a bis 3d: Längsversätze mehrerer nebeneinander angeordneter Versatzflächen relativ zu mehreren nebeneinander angeordneten Bezugsflächen,
- Figuren 4a bis 4j: Ausschnitte jeweils einer Versatzfläche und einer Bezugsfläche, welche parallel übereinander liegen,
- Figuren 5a und 5b: eine Draufsicht und eine Ansicht auf die Unterseite eines Vielschichtbauelements mit Innenelektroden, die rechteckige Aussparungen aufweisen,
- Figur 6: eine perspektivische Ansicht des mit den Figuren 5a und 5b gezeigten Vielschichtbauelements,
- Figuren 7a und 7b: eine Draufsicht und eine Ansicht auf die Unterseite eines Vielschichtbauelements mit Innenelektroden, die jeweils zwei rechteckige Aussparungen aufweisen,
- Figur 8: eine perspektivische Ansicht des mit den Figuren 7a und 7b gezeigten Vielschichtbauelements,
- Figuren 9a und 9b: eine Draufsicht und eine Ansicht auf die Unterseite eines Vielschichtbauelements mit Innenelektroden, die jeweils mit einer rechteckigen Aussparung und einer Verengung ausgebildet sind,
- Figur 10: eine perspektivische Ansicht des mit den Figuren 9a und 9b gezeigten Vielschichtbauelements,
- Figuren 11a und 11b: eine Draufsicht und eine Ansicht auf die Unterseite eines Vielschichtbauelements mit Innenelektroden, die jeweils eine rechteckige Aussparung und eine alternative Verengung aufweisen,
- Figur 12: eine perspektivische Ansicht des mit den Figuren 11a und 11b gezeigten Vielschichtbauelements,
- Figuren 13a und 13b: eine Draufsicht und eine Ansicht auf die Unterseite eines Vielschichtbauelementmoduls mit zwei Innenelektrodenstapeln, die jeweils Innenelektroden mit einer rechteckigen Aussparung und einer Verengung in der Form eines Stegs aufweisen,
- Figur 14: eine perspektivische Ansicht des mit den Figuren 13a und 13b gezeigten Vielschichtbauelementmoduls,
- Figuren 15a und 15b: eine Draufsicht und eine Ansicht auf die Unterseite eines Vielschichtbauelementmoduls mit zwei unterschiedlich ausgerichteten Innenelektrodenstapeln, die jeweils Innenelektroden mit einer rechteckigen Aussparung und einer Verengung in der Form eines Stegs aufweisen,
- Figur 16: eine perspektivische Ansicht des mit den Figuren 15a und 15b gezeigten Vielschichtbauelementmoduls,
- Figuren 17a und 17b: eine Draufsicht und eine Ansicht auf die Unterseite eines Vielschichtbauelements mit Innenelektroden, von denen eine Sorte kreuzförmig und eine zweite Sorte rechteckig ist, wobei die Innenelektroden mehrere rechteckige Aussparungen aufweisen,
- Figur 18: eine perspektivische Ansicht des mit den Figuren 17a und 17b gezeigten Vielschichtbauelements,
- Figuren 19a und 19b: eine Draufsicht und eine Ansicht auf die Unterseite eines Vielschichtbauelements mit Innenelektroden, von denen eine Sorte kreuzförmig und eine zweite Sorte rechteckig ist, wobei die Kreuzform durch unterschiedlich breite Arme gekennzeichnet ist,
- Figur 20: eine perspektivische Ansicht des mit den Figuren 19a und 19b gezeigten Vielschichtbauelementmoduls,
- Figur 21a und 21b: eine Draufsicht und eine Ansicht auf die Unterseite eines Vielschichtbauelements mit Innenelektroden, von denen eine Sorte kreuzförmig und eine zweite Sorte die Form der Hälfte einer Kreuzform bzw. eine T-Form aufweist,
- Figur 22: eine perspektivische Ansicht des mit den Figuren 21a und 21b gezeigten Vielschichtbauelementmoduls,
- Figur 23: eine perspektivische Ansicht eines elektrischen Vielschichtbauelements mit einem Außenkontakt an jeder Seitenfläche,
- Figur 24: eine mögliche innere Ausführung des mit der Figur 23 gezeigten elektrischen Vielschichtbauelements,
- Figur 25: eine Draufsicht auf ein elektrisches Vielschichtbauelement mit einem Satz rahmenförmiger Innenelektroden und mit zwei Sätzen rechteckiger Innenelektroden,
- Figur 26: eine Draufsicht auf ein elektrisches Vielschichtbauelement mit zwei Sätzen hufeisenförmiger Innenelektroden und mit einem Satz kreuzförmiger Innenelektroden,
- Figur 27: eine perspektivische Ansicht eines elektrischen Vielschichtbauelementmoduls mit mehreren Außenkontakten an zwei sich gegenüberliegenden Seitenflächen,
- Figur 28: eine mögliche innere Ausführung des mit der Figur 27 gezeigten elektrischen Vielschichtbauelementmoduls,
- Figur 29: eine innere Ausführung eines Vielschichtbauelementmoduls mit alternierend angeordneten Masseelektroden.

Genaue Messungen haben ergeben, dass Lageverschiebungen von Innenelektroden sowie Dielektrikumsschichten eines Vielschichtbauelements im Rahmen des Herstellungsprozesses vor allem beim Stapeln und beim Laminieren auftreten, die zu einem sogenannten Offset einer Versatzfläche gegenüber einer Bezugsfläche in X-Y Raumrichtungen (laterale Verschiebungen) führen können. Dadurch wird einerseits die Sollkapazität des Vielschichtbauelements häufig nicht erreicht, andererseits wird die Kapazitätsstreuung innerhalb einer Menge gleichartiger Vielschichtbauelemente erhöht.

Die Kapazität eines keramischen Vielschichtbauelements wird idealerweise neben dem Dielektrikum und dessen Dicke sowie der Gesamtzahl der Schichten allgemein durch die Überlappfläche von Innenelektroden bestimmt, die durch die orthogonale Projektion einer auf einem definierten Potential befindlichen Innenelektrodenfläche auf eine weitere auf unterschiedlichem Potential befindliche Innenelektrodenfläche entsteht.

Überlappflächen bzw. -längen werden folgendermaßen bezeichnet:
- A_{ü}: gesamte Überlappflache zwischen mehreren überlappenden Flächen,
- L_{ü}: Überlapplänge zwischen mehreren überlappenden Flächen in Längsrichtung,
- B_{ü}: Überlapplänge zwischen mehreren überlappenden Flächen in Querrichtung,
- A_{u,0}: Überlappflache in der Solllage der sich überlappenden Flächen, d.h. ohne Quer- oder Längsversatz der Versatzfläche VF
- L_{ü,0} Überlapplänge in Längsrichtung in der Solllage der sich überlappenden Flächen,
- B_{ü,0} Überlapplänge in Querrichtung in der Solllage der sich überlappenden Flächen.

Diese Bezeichnungen erhalten das Zeichen + Δ oder -Δ, je nachdem, ob es sich um eine Vergrößerung oder eine Verringerung der jeweiligen Überlappflächen bzw. -längen handelt.

Zur Illustration der Auswirkung von Abweichungen der Lage der Flächen gegenüber der Solllage wird an dieser Stelle eine sogenannte Bezugsfläche BF definiert, relativ zu der eine sogenannte Versatzfläche VF angeordnet ist. Die Versatzfläche ist diejenige Fläche, deren Lage sich gegenüber ihrer Solllage ändern kann.

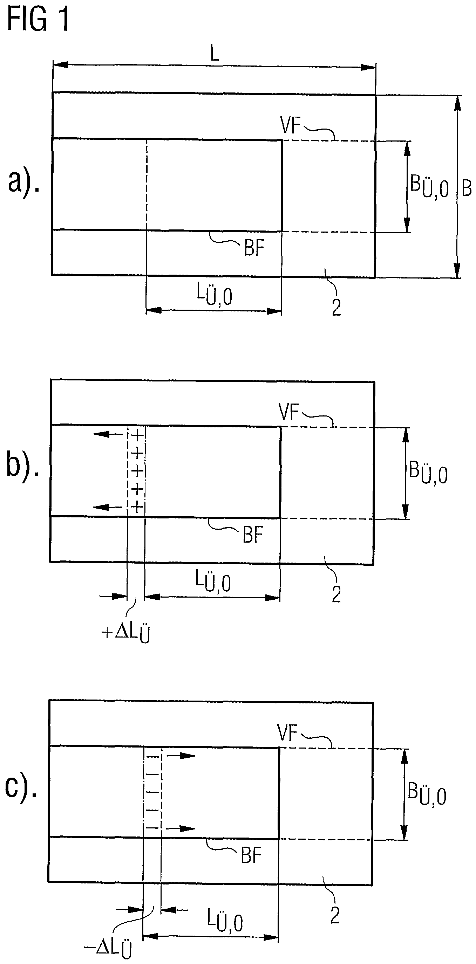

Die Figuren 1 bis 3 zeigen im Allgemeinen zwei sich überlappende Flächen BF und VF, die beispielsweise Innenelektrodenflächen eines keramischen Vielschichtbauelements darstellen könnten, innerhalb eines nicht näher dargestellten Körpers 2, beispielsweise eines keramischen Grundkörpers 2 mit der Länge L und Breite B. Der Grundkörper 2 könnte zum Beispiel als keramische Schicht angesehen werden. Die Bezugsfläche BF ist theoretisch als nicht beweglich zu verstehen, die Versatzfläche VF dagegen aber beweglich, wie z.B. aufgrund fertigungsbedingter Fehler während der Herstellung eines mit diesen Innenelektrodenflächen ausgebildeten elektrischen Vielschichtbauelements. In Längsrichtung bilden die Flächen BF und VF zusammen eine den Grundkörper teilweise abdeckende Fläche, die sich von einem Ende des Grundkörpers 2, beispielsweise von einem hier nicht gezeigten Außenanschluss, zum anderen Ende, der ebenfalls mit einem Außenanschluss versehen sein kann, erstreckt.

In den Figuren 1a bis 1c weisen die Versatzfläche VF und die Bezugsfläche BF die gleichen Breiten B auf. Die Versatzfläche VF ist in Querrichtung nicht versetzt.

Figur 1a zeigt eine Versatzfläche VF, die in einer theoretischen Solllage oberhalb der Bezugsfläche BF angeordnet ist. Der Längsversatz der Versatzfläche VF gegenüber der Bezugsfläche BF ist also 0, sodass A_{ü} = A_{ü,0} = L_{ü,0} x B_{ü,0} ergibt und ΔA_{ü} = 0 ist.

Figur 1b zeigt eine Versatzfläche VF, die gegenüber der Bezugsfläche BF nach links um einen Länge + ΔL_{ü} versetzt wurde, sodass die gesamte Überlappfläche A_{ü} um eine Fläche ΔA_{ü} zugenommen hat und sich die Beziehung A_{ü} = A_{ü,0} + ΔL_{ü} x B_{ü,0} = ΔA_{ü,0} + ΔA_{ü} ergibt. Die Kapazität zwischen den Flächen wird durch die Zunahme um ΔL_{ü} der Überlapplänge also vergrößert.

Figur 1c zeigt eine Versatzfläche VF, die gegenüber der Bezugsfläche BF nach rechts um die Länge - ΔL_{ü} versetzt wurde, sodass die gesamte Überlappfläche A_{ü} um eine Länge ΔL_{ü} abgenommen hat und sich die Beziehung A_{ü} = A_{ü,0} - ΔL_{ü} x B_{ü,0} = ΔA_{ü,0} - ΔA_{ü} ergibt. Die möglicherweise vorhandene Kapazität zwischen den Flächen wird durch die Abnahme um ΔA_{ü} der Überlappfläche also verkleinert.

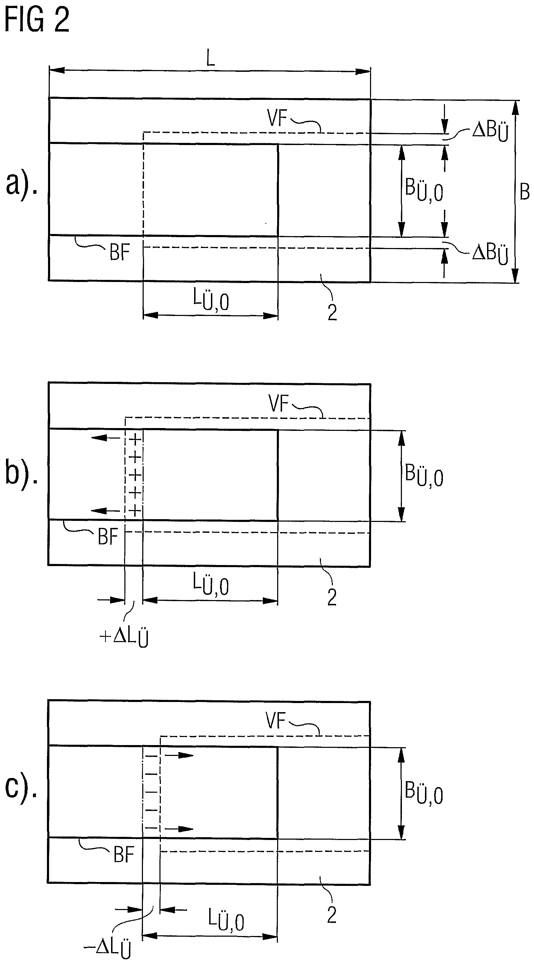

Figuren 2a bis 2c zeigen Längsversätze im Sinne der Figuren 1a bis 1c, jedoch weist die Versatzfläche VF gegenüber der Bezugfläche BF eine um einen Wert 2ΔB_{ü} breitere Fläche auf. Durch die vergrößerte Fläche der Versatzfläche VF ergibt sich in Querrichtung eine Toleranz von +/- ΔB_{ü}, aufgrund derer ein etwaiger Querversatz der Versatzfläche bis zum Wert von +/ΔB_{ü} keine Änderung der gesamten Überlappfläche A_{ü} ergeben würde. Dies würde auch für den Fall gelten, dass die Bezugsfläche BF entsprechend breiter wäre als die Versatzfläche. In den Figuren werden noch keine Querversätze gezeigt.

In der Figur 2a befinden sich die Versatzfläche VF und Bezugsfläche BF in einer Ausgangslage ohne relativen Versatz.

In der Figur 2b ist durch die Längsverschiebung der Versatzfläche in Richtung der nach links gerichteten Pfeile die möglicherweise vorhandene Kapazität zwischen den beiden Flächen insgesamt vergrößert, in Figur 2c durch eine Verschiebung der Versatzfläche in die entgegengesetzte Richtung dagegen verkleinert. Die Gleichungen entsprechen denjenigen aus den Figuren 1a bis 1c.

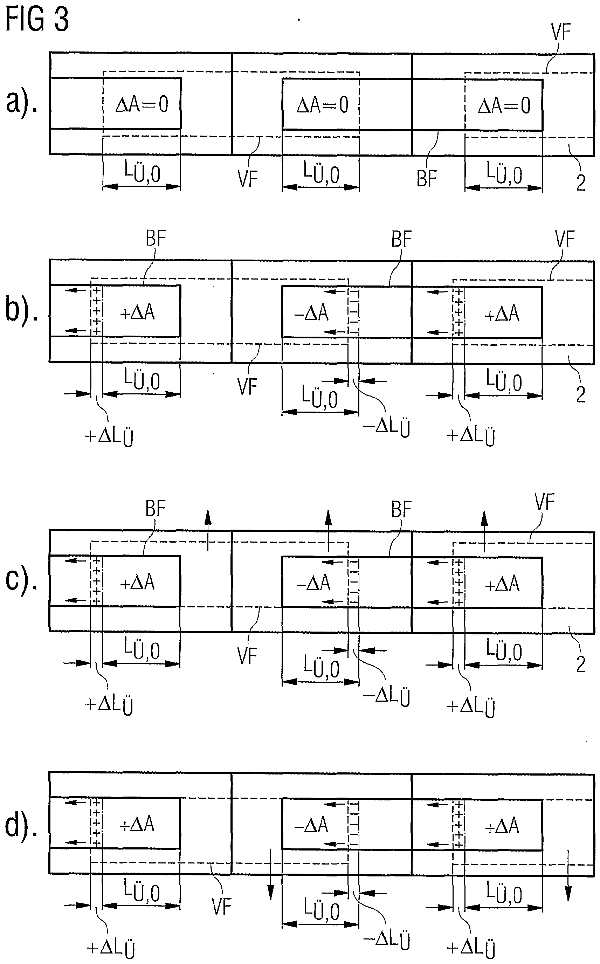

Im Unterschied zu den obigen Beispielen, welche jeweils einzelne Vielschichtbauelemente behandeln, wird mit Hilfe der Figuren 3a bis 3d eine Anordnung mehrerer Innenelektrodenflächen betrachtet, die sich jeweils in derselben Ebene eines jeweiligen Innenelektrodenstapels befinden. Die gezeigten Innenelektroden könnten sich beispielsweise auf einem keramischen Flächensubstrat befinden, das später vereinzelt wird.

In Längsversatzrichtung erfahren mehrere Flächen der dargestellten Stapelebene die gleiche Flächenänderung ΔA_{ü}, da ein Offset sich auf mehrere Flächen auswirkt; jedoch fließt ΔA_{ü} für übernächste Nachbarn mit jeweils gleichem, für nächste Nachbarn aber mit entgegengesetztem Vorzeichen ein. Dies liegt daran, dass eine beliebige Versatzfläche VF jeweils zwei benachbarten Bauteilen zugeordnet ist und somit ein Längsversatz + ΔL_{ü} in einem beliebigen Bauteil für die beiden nächsten Nachbarn als -ΔL_{ü} fungiert.

In den Figuren 3a bis 3d wird gezeigt, wie im Unterschied zu den Figuren 1a bis 2c auf eine Schicht einer keramischen Grünfolie eines elektrischen Bauelementkomposits mehrere Innenelektroden aufgebracht sind. Die in vertikale Richtung verlaufenden, durchgehenden Linien zeigen die später bei der Vereinzelung des Bauelementkomposits zu nutzende Trennlinie.

Figur 3a zeigt den Fall, wo Längsversatz und Querversatz der Versatzflächen VF bei null liegen, und die Flächen sich in einer Ausgangslage befinden.

Figur 3b zeigt einen Fall, wo der Längsversatz der Versatzflächen VF in Richtung der nach links gezeigten Pfeile bei einem Wert ΔL_{ü}, der Querversatz jedoch bei null liegt. Eine Netto-Zunahme der drei gezeigten Überlappflächen (durch den Wert: +2ΔA_{ü} - ΔA_{ü}) und damit der möglicherweise vorhandenen Kapazität, ist zu verzeichnen.

Figur 3c zeigt den Fall, wo der Längsversatz der Versatzflächen bei einem Wert ΔL_{ü} und der Querversatz bei einem Wert ΔB_{ü} liegt. Dadurch, dass die Versatzfläche VF breiter ausgeführt ist als die darüber liegende Bezugsfläche BF, führt alleine der Querversatz gemäß der nach oben gerichteten Pfeile nicht zu einer Zunahme oder Abnahme der gemeinsam gebildeten Überlappfläche zwischen der Bezugs- und der Versatzfläche. Durch den Längsversatz ist jedoch eine Netto-Zunahme der Überlappfläche gemäß Figur 3b zu verzeichnen.

Figur 3d zeigt denselben Fall wie Figur 3c, nur dass der Querversatz diesmal nach unten gerichtet ist. Dadurch, dass die Versatzfläche VF breiter ausgeführt ist als die darüber liegende Bezugsfläche BF, führt der Querversatz ΔB_{ü} der Versatzfläche gemäß der nach unten gerichteten Pfeile allein nicht zu einer Zunahme oder Abnahme der gesamten Überlappfläche. Durch den Längsversatz ist jedoch eine netto Zunahme der Überlappfläche gemäß Figur 3b zu verzeichnen.

Mit den Figuren 2 bis 3 wurde gezeigt, wie eine Verschiebung einer Innenelektrode auf einem einzigen Flächensubstrat gleich zu einer Veränderung der elektrischen Eigenschaften aller später vereinzelten elektrischen Bauelemente führen kann.

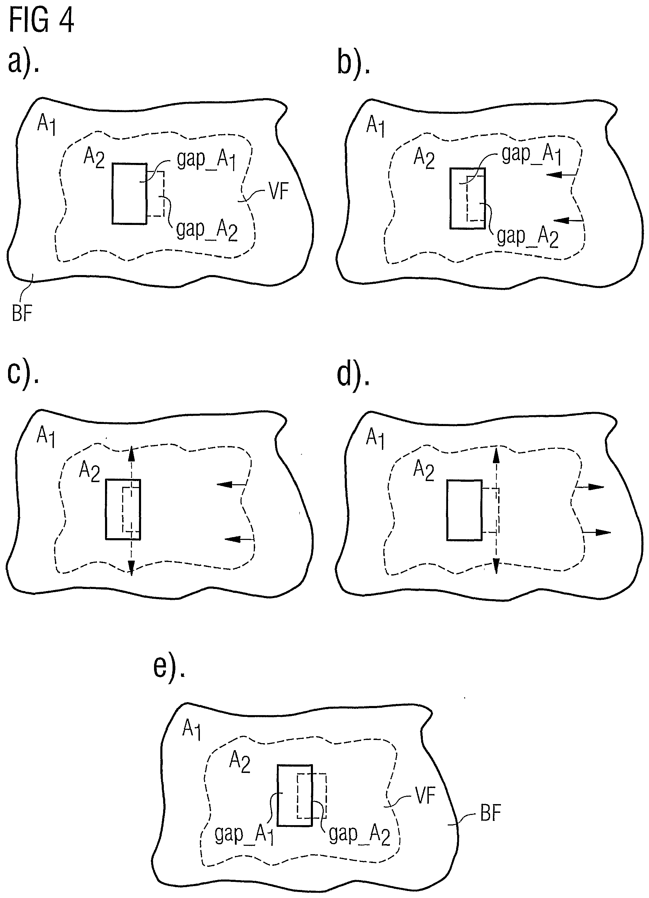

Mit der Hilfe der Figuren 4a bis 4j wird ein Konzept zur Kompensation einer Ab- oder Zunahme um -ΔA bzw. +ΔA der gemeinsam aufgespannten Fläche benachbarter Innenelektroden vorgestellt.

Mit diesen Figuren werden elektrisch ladbare und leitfähige Flächen, wie zum Beispiel Innenelektroden, gezeigt, die jeweils eine Aussparung aufweisen. Die Innenelektroden werden in einem elektrischen Bauelement derart angeordnet, dass deren Aussparungen in Wechselwirkung miteinander die Verringerung oder die Zunahme der Überlappfläche A_{ü} mehrerer Innenelektroden, insbesondere von zwei Innenelektroden kompensieren können.

Die Aussparungen unterschiedlicher Innenelektroden sind dabei in orthogonaler Projektion zueinander zumindest ohne Unterbrechung nebeneinander angeordnet, vorzugsweise jedoch überlappend. Die effektive Aussparungsfläche wird mit A_{gap} bezeichnet, die Aussparungen selbst mit gap_A1 und gap_A2.

Die Innenelektroden mit jeweiligen Aussparungen sind derart angeordnet, dass bei einer Abnahme einer Überlappfläche A_{ü} der Innenelektroden gegenüber einem Sollwert, wie mit den Figuren 1c und 2c gezeigt, der damit einhergehende Versatz der zu den jeweiligen Innenelektrodenflächen gehörenden Aussparungen von einer sich überlappenden Ausgangslage heraus zu einer Abnahme der effektiven Aussparungsfläche A_{gap} führt. Wenn sich nämlich die effektive Aussparungsfläche verkleinert, wird die ursprüngliche Abnahme der Überlappfläche A_{ü} gleichzeitig wieder aufgehoben, sodass die Überlappfläche A_{ü} insgesamt konstant bleibt.

Die effektive Aussparungsfläche A_{gap} kann beispielsweise dadurch verkleinert werden, dass sich eine kleinere Aussparung einer Innenelektrode über eine größere Aussparung einer weiteren Innenelektrode überlagert, und zwar so, dass sich gegenüber der ursprünglichen Lage der Aussparungen die effektive Aussparungsfläche kleiner geworden ist. Dabei ist bei zwei benachbarten Innenelektroden die kleinere der Aussparungen für den Einfluss auf den elektromagnetischen Effekt bestimmend, der durch die Innenelektroden und einer dazwischenliegenden keramischen Schicht erzeugt wird. Die maximale Verkleinerung der effektiven Aussparungsfläche ist also dann erreicht, wenn die kleinere der Aussparungen sich in orthogonaler Projektion vollständig unter- bzw. oberhalb der größeren Aussparung befindet.

Bei einer Zunahme der genannten Überlappfläche A_{ü} gegenüber einem Sollwert, wie mit den Figuren 1b und 2b gezeigt, führt mittels einer geeigneten Innenelektrodenkonstruktion und Innenelektrodenanordnung der mit der Verschiebung einhergehende Versatz der zu den jeweiligen Flächen gehörenden Aussparungen zu einer Zunahme der effektiven Aussparungsfläche A_{gap}. Wenn sich beispielsweise die effektive Aussparungsfläche vergrößert, wird die ursprüngliche Zunahme der Überlappfläche A_{ü} der Innenelektroden gleichzeitig wieder aufgehoben, sodass die Überlappfläche A_{ü} konstant bleibt.

Die effektive Aussparungsfläche A_{gap} kann beispielsweise dadurch vergrößert werden, dass sich eine kleinere Aussparung einer Innenelektrode abseits der orthogonal vollständigen Überlappungslage zwischen ihr und einer größeren Aussparung der benachbarten Innenelektrode befindet, d.h., die Wirkung der größeren Aussparung wird weniger von der kleineren Aussparung eingeschränkt. Die kleinere Aussparung wandert im relativen Sinne und in orthogonaler Projektion also in die Richtung des Randes der Innenelektrode mit der größeren Aussparung.

Es werden in den Figuren 4a bis 4j ausschnittsweise Innenelektrodenflächen A1 und A2 gezeigt, welche jeweils den bereits beschriebenen Bezugsflächen BF und Versatzflächen VF entsprechen. Die Innenelektrodenfläche A1 wird mit einem Grundriss anhand einer durchgehenden Linie gezeigt, die Innenelektrodenfläche A2 dagegen mit einem Grundriss anhand einer gestrichelten Linie. Dabei liegt die Innenelektrodenfläche A1 aus der Sicht des Betrachters (in die Seite hinein) stets unterhalb der Innenelektrodenfläche (Versatzfläche) A2. Jede Innenelektrodenfläche weist eine Aussparung auf, wobei insbesondere hier die Fläche der Aussparung der Versatzfläche VF (Innenelektrodenfläche A2) kleiner ist als diejenige der Bezugsfläche BF (Innenelektrodenfläche A1).

Figur 4a zeigt, wie die Überlappfläche A_{ü} der Innenelektrodenflächen A1 und A2 allgemein der Schnittfläche der orthogonalen Projektion von A₂ auf A₁, A_{ü} = A₁ ∩ A₂ entspricht. Sowohl A₁ als auch A₂ weisen rechteckige Aussparungen gap_A₁ und gap_A₂ in der Form von Löchern bzw. sogenannten Gaps auf. Mittels der Löcher wird eine kapazitiv wirksame Überlappfläche A_{ü} der Innenelektroden genau um eine effektive Aussparungsfläche A_{gap} reduziert, die entsteht, wenn gap_A₂ auf die Elektrodenfläche A1 (Bezugsfläche BF) orthogonal projiziert wird. Hierfür wird folgende Notation verwendet: A_{gap} = A_{gap}__{A1} ∪ A_{gap}__{A2}.

A_{gap} repräsentiert also die Gesamtheit der Fläche, über welche die Bezugs- oder Versatzfläche jeweils keine Gegenelektrode "sieht", mit welcher also keine kapazitive Wirkung erzeugt wird.

In der Ausgangsposition, die in Figur 4a gezeigt wird, liegt die orthogonale Projektion des Lochs gap_A₂ der Innenelektrodenfläche A2 vorzugsweise lückenlos, sowie überlappungsfrei, neben dem Loch gap_A₁ der Innenelektrodenfläche A1. Daher entspricht in diesem Fall die effektive Aussparungsfläche A_{gap} in einem Ausgangszustand A_{gap,0} gerade der Summe von gap_A1 und gap_A2. Die maximal erreichbare effektive Aussparungsfläche A_{gap} ist wie hier gezeigt dann erreicht, wenn in orthogonaler Projektion zwei Gaps bzw. Löcher ohne Unterbrechung direkt nebeneinander liegen. Die maximale effektive Aussparungsfläche entspricht im Sinne der durch Innenelektroden und Dielektrikumsschichten erzeugbaren Kapazität, der größtmöglichen Reduzierung der Kapazität. Jede orthogonale Überlappung der Löcher führt im Vergleich zu dieser maximalen effektiven Aussparungsfläche zu einer Zunahme bzw. zu einer geringeren Abnahme der Kapazität.

Figur 4b zeigt den Zustand, wo sich nun Elektrodenfläche A₂ in Pfeilrichtung nach links verschoben hat. Somit legt sich gap_A₂ unter gap_A₁. Dies geht einher mit der Verringerung von A_{gap} durch das kleinere Loch bzw. die Zunahme der Überlappfläche bzw. der Vergrößerung von A_{ü} um ebendiesen Betrag, der A_{gap} abgezogen wurde. Der Maximalbetrag, um den A_{gap} verringert werden kann, entspricht gerade der kleineren der beiden Gap-Flächen, d.h. der Gap-Fläche gap_A2. Mit der Verschiebung nach links der Innenelektrodenfläche A2 ergibt sich also lediglich eine Verringerung der Gap-Fläche A_{gap}.

Wenn sich durch die Verschiebung der Elektrodenfläche A₂ nach dem Muster gemäß Figur 1c an ihrem einen Ende eine Abnahme der Überlappfläche A_{ü} ergibt, wird diese durch die Abnahme der effektiven Aussparungsfläche durch die Verschiebung des kleineren Lochs gap_A₂ unterhalb bzw. oberhalb des größeren Lochs gap_A₁ wieder aufgehoben.

Figur 4c zeigt nun, wie durch unterschiedliche Maße der Löcher gap_A₁ und gap_A₂, insbesondere in Richtung eines Querversatzes (angedeutet durch die nach oben und unten zeigenden, gestrichelten Pfeile) analog zu den Figuren 3c und 3d längsversatzkompensierende Gap-Flächen auch Querversätze kompensieren können. Wenn sich beispielsweise das Loch gap_A2 in Richtung der Pfeile bewegt, vergrößert sich die effektive Aussparungsfläche A_{gap} sobald keine vollständige Überlagerung der Aussparungsflächen mehr gewährleistet ist, sodass gleichzeitig eine möglicherweise mit diesem Querversatz einhergehende vergrößerte Überlappfläche A_{ü} der Innenelektroden kompensiert wird. Andererseits haben benachbarte Aussparungen mit unterschiedlichen Breiten, die sich in orthogonaler Projektion überlagern, den Vorteil, dass eine Verschiebung in Richtung der gestrichelten Pfeile der weniger hohen Aussparung solange nicht zu einer Vergrößerung der effektiven Aussparungsfläche führt (und damit keine Kompensation eines Querversatzes zustande kommt), bis ein Rand dieser weniger hohen Aussparung in orthogonaler Projektion über den Rand der größeren Aussparung hinausgeht. Unter der Breite einer Aussparung wird dabei die Abmessung der Aussparung in Richtung eines Querversatzes verstanden, wobei die Länge einer Aussparung ihre Abmessung in Richtung eines Längsversatzes bedeutet. Unterschiedlich breite Aussparungen benachbarter Innenelektroden die sich orthogonal gegenüber liegen haben also hinsichtlich einer Querversatzkompensation denselben Vorteil, wie benachbarte Innenelektroden, die unterschiedlich breit sind (siehe hierzu Figuren 2 bis 3).

In der Lage nach Figur 4d ist bereits die maximale effektive Aussparungsfläche A_{gap} erreicht, sodass keine weitere Kompensation zugenommener Überlappfläche A_{ü} stattfinden kann. Dabei spielt es keine Rolle, ob die kleinere der Aussparungen weiter nach oben oder nach unten verschoben ist.

Figur 4e zeigt wie in einer Ausgangsposition die orthogonale Projektion von gap_A₂ auf die Bezugsfläche BF sowohl mit gap_A₁ als auch mit der Bezugsfläche A1 bzw. BF überlappt. Für die Gap-Fläche im Ausgangszustand A_{gap,0} gilt also: gap_A1 < A_{gap} < gap_A1 + gap_A2.

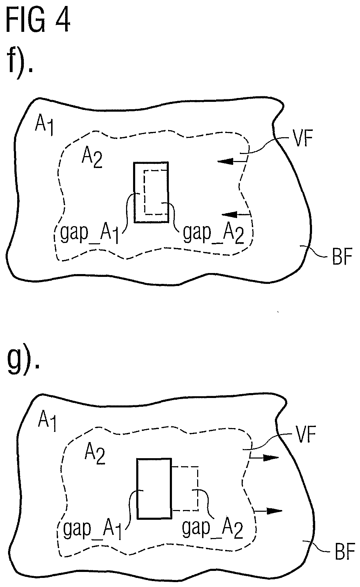

Wird nun A₂ gemäß Figur 4f in Pfeilrichtung verschoben, wird die durch gap_A₁ und gap_A2 gebildete effektive Aussparungsfläche verkleinert und somit A_{ü} vergrößert.

Wird gegenüber der in Figur 4e gezeigten Ausgangslage die Innenelektrodenfläche A₂ gemäß Figur 4f nach links verschoben, wird die effektive Aussparungsfläche A_{gap} bis zu einem minimalen Wert verkleinert, wobei sich die Löcher gap_A1 und gap_A2 in orthogonaler Projektion vollständig überlappen. Eine Abnahme der Überlappfläche A_{ü} der Innenelektroden kann dadurch kompensiert werden.

Wird gegenüber der in Figur 4e gezeigten Ausgangslage die Innenelektrodenfläche A₂ gemäß Figur 4g in Pfeilrichtung nach rechts verschoben, wird die effektive Aussparungsfläche A_{gap} vergrößert, wodurch eine versatzbedingte Vergrößerung von A_{ü} kompensiert werden kann.

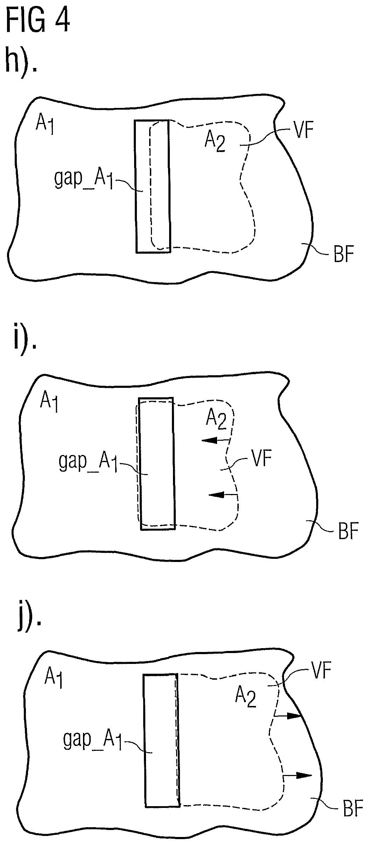

Figur 4h zeigt eine Ausgangslage, bei der ein Querbegrenzung in der Form eines Endes einer Innenelektrode A₂ sich ober- bzw. unterhalb eines Lochs gap_A₁ einer benachbarten Innenelektrode A₁ befindet, sich in orthogonaler Projektion also innerhalb des Lochs befindet. Der überhängende Bereich des Endes der Innenelektrode A₂ hat also keine oder zumindest eine sehr geringe Wirkung auf die Kapazität.

Figur 4i zeigt eine Veränderung gegenüber der mit der Figur 4h gezeigten Ausgangslage, bei der sich die Innenelektrodenfläche A₂ bzw. deren Ende nach links verschoben hat. Ohne die Überlagerung mit einem Loch einer benachbarten Innenelektrode hätte diese Verschiebung insgesamt zu einer Zunahme der kapazitiv wirksamen Überlappfläche A_{ü} geführt. Bis zu dem Punkt, wo das Ende der Innenelektrode A₂ sich wieder oberhalb bzw. unterhalb der Innenelektrodenfläche A1 befindet, kann eine Verschiebung der Innenelektrode A₂ nach links durch das Loch kompensiert werden.

Figur 4j zeigt eine andere Veränderung gegenüber der mit der Figur 4h gezeigten Ausgangslage, bei der sich die Innenelektrodenfläche A₂ bzw. deren Ende nach rechts verschoben hat. Ohne die Überlagerung mit einem Loch einer benachbarten Innenelektrode hätte diese Verschiebung insgesamt zu einer Abnahme der kapazitiv wirksamen Überlappfläche A_{ü} geführt. Bis zu dem Punkt, wo das Ende der Innenelektrode A₂ sich wieder oberhalb der Innenelektrodenfläche A1 befindet, kann eine Verschiebung der Innenelektrode A₂ nach rechts durch das Loch kompensiert werden.

Die folgenden Figuren zeigen im Ganzen oder Ausschnittsweise elektrische Vielschichtbauelemente bzw. Module, die im Wesentlichen bereits fertig hergestellt sind. Die gezeigten Innenelektroden haben sich also bereits im Herstellungsverfahren verschoben. Deren elektrischen Kennwerte haben sich jedoch aufgrund möglicher Verschiebung nicht oder zumindest nur geringfügig geändert, weil die Innenelektroden Aussparungen aufweisen und in der gezeigten Art relativ zueinander angeordnet sind. Der Vollständigkeit der technischen Lehre halber wird jedoch bei den folgenden Ausführungsbeispielen angenommen, dass diese Innenelektroden theoretisch noch verschoben werden können.

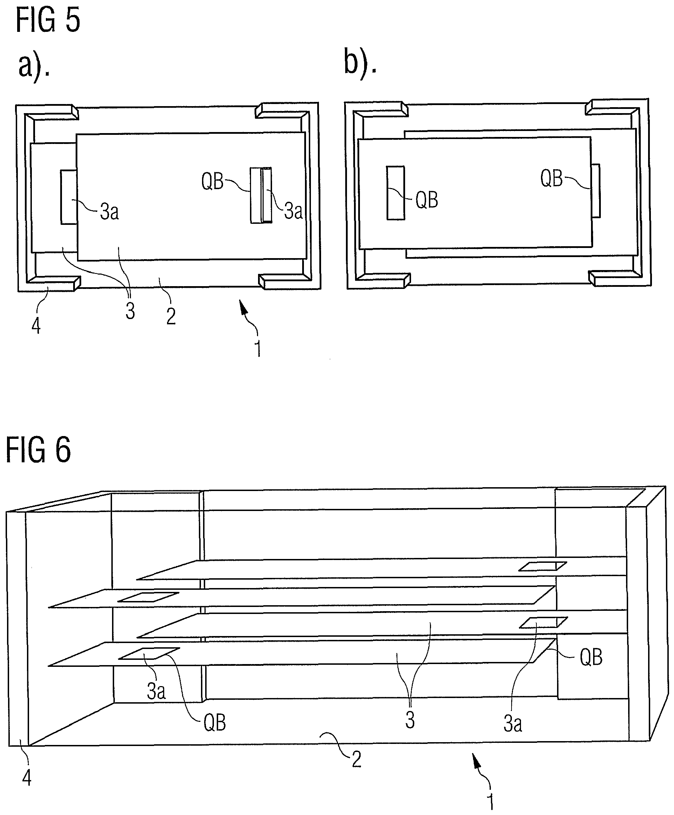

Figur 5a zeigt eine Draufsicht auf ein elektrisches Vielschichtbauelement 1, in dem mehrere Innenelektroden 3 abwechselnd neben keramischen Schichten eines Grundkörpers 2 angeordnet sind. Die Innenelektroden sind rechteckig und weisen jeweils eine rechteckige Aussparung in der Form eines Lochs 3a auf. Die Innenelektroden sind derart übereinander angeordnet, dass sich deren Löcher gegenseitig zumindest teilweise überlappen.

Die Maße der Löcher richten sich dabei nach den zu erwartenden Verschiebungen von Innenelektroden bei der Herstellung eines Vielschichtbauelements und den Abmessungen der Innenelektroden. Die zu erwartende Verschiebung kann dabei durch eine statistische Analyse der in der Herstellung auftretenden Fertigungsfehler ermittelt werden. Liegen die Längsversatzverschiebungen beispielsweise in einem Bereich von einigen 10 µm, so wäre eine Länge eines Lochs um mindestens diesen Betrag zu wählen. Analoges gilt zur Kompensation von Querversätzen, wobei in diesem Falle die Breite der Löcher bzw. die Breite der Innenelektroden ermittelt und gewählt wird.

Die Innenelektroden 3 sind abwechselnd mit unterschiedlich gepolten Außenanschlüssen 4, die durch Metallisierungen gebildet sein können, kontaktiert und werden unterschiedlich dunkel bzw. hell dargestellt. Die Außenanschlüsse 4 können, müssen aber nicht, die Ecken des Grundkörpers 2 umklammern bzw. als Kappen realisiert sein, d.h., sie können jeweils auch lediglich auf eine einzige Außenseitenfläche des Grundkörpers aufgebracht sein. Die Innenelektroden weisen in abwechselnder Weise auch unterschiedliche Breiten auf, um eine Querversatzkompensation gemäß der Beschreibung zu den Figuren 2 und 3 zu erlauben.

Sowohl die Löcher als auch das einem Außenkontakt abgewandte Ende einer Innenelektrode können Querbegrenzungen QB der Innenelektroden bilden.

Eine Verschiebung der in Figur 5a gezeigten oberen Innenelektrode nach links hätte beispielsweise zur Folge, dass die Kapazität an dem linken Ende nur geringfügig zunimmt (die Querbegrenzung QB, die durch das Ende der oberen Innenelektrode gebildet wird, überlagert auch die Seitenbereiche der darunter liegenden Innenelektrode, die sich neben der Aussparung befinden). Wäre die Innenelektrode jedoch ganz ohne Aussparung ausgeführt, hätte die Verschiebung einen um die Größe des Lochs größere Auswirkung auf die Kapazität. Auf der anderen (rechten) Seite jedoch legt sich ein größerer Bereich der rechten Aussparung über die darunter liegende Innenelektrode, sodass die zumindest geringfügige Kapazitätszunahme an der rechten Seite gänzlich durch eine Kapazitätsabnahme an der rechten Seite kompensiert werden kann. Es wird, wie zuvor genannt, angenommen, dass beispielsweise eine solche Verschiebung bereits beim Aufbringen der Innenelektrodenstrukturen auf eine Grünfolie stattgefunden hat.

Figur 5b zeigt eine Ansicht auf die Unterseite des mit der Figur 5a vorgestellten elektrischen Vielschichtbauelements 1, wobei die Innenelektrode, die mit ihrer Oberfläche der unteren Oberfläche des Vielschichtbauelements am nächsten liegt, mit einem anderen Außenanschluss kontaktiert ist, als die Innenelektrode, die mit ihrer Oberfläche der oberen Oberfläche des Vielschichtbauelements am nächsten liegt. Es wird gezeigt, wie die von den Außenanschlüssen abgewandten Enden der Innenelektroden sich in orthogonaler Projektion oberhalb einer Aussparung 3a einer jeweils benachbarten Innenelektrode befinden.

Figur 6 ist eine perspektivische Darstellung des mit den Figuren 5a und 5b vorgestellten, elektrischen Vielschichtbauelements 1. Es wird gezeigt, wie Querbegrenzungen, die durch die Endbereiche der Innenelektrode gebildet sind, in orthogonaler Projektion allesamt zumindest mit einer Querbegrenzung QB, die durch ein Loch einer weiteren Innenelektrode gebildet ist, überlappen. Obwohl die Breite einer oberhalb eines Lochs befindlichen Innenelektrode größer ist, als die Breite des Lochs, findet zumindest eine teilweise Kompensation statt. Die Zunahme der Kapazität durch eine Verschiebung der Innenelektrode nach links wird durch die Präsenz des darunter liegenden Lochs eingeschränkt. Entspricht aber die Summe der Breite beider Löcher gerade die Breite der unteren (schmaleren) Innenelektrode, ist eine vollständige Kompensation möglich.

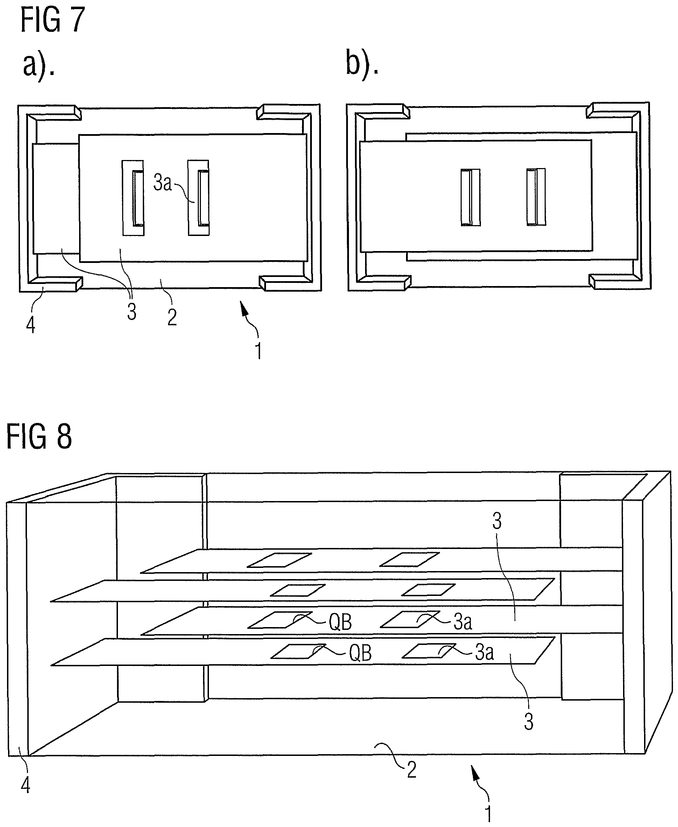

Figur 7a zeigt eine Draufsicht auf ein alternatives elektrisches Vielschichtbauelement 1, bei dem jede im Grundkörper 2 angeordnete Innenelektrode 3 rechteckig ist und mehrere rechteckige Aussparungen 3a aufweist. Dabei sind Aussparungen jeweils benachbarter Innenelektroden unterschiedlich breit ausgeführt, um eine Querversatzkompensation gemäß der Beschreibung zu den Figuren 4c und 4d zu erlauben. Außerdem weisen die Innenelektroden in abwechselnder Weise unterschiedliche Breiten auf, um eine Querversatzkompensation gemäß der Beschreibung zu den Figuren 2 und 3 zu erlauben. Wie im vorherigen Ausführungsbeispiel sind die Innenelektroden abwechselnd jeweils mit nur einem Außenanschluss 4 kontaktiert, welches durch die unterschiedlichen Graustufen der Innenelektroden dargestellt ist. In einem elektrischen Vielschichtbauelement 1 mit einer Mehrzahl von gestapelten keramischen Schichten und Innenelektroden ist es besonders vorteilhaft, jede Innenelektrode mit mehreren vorzugsweise rechteckigen Löchern zu versehen, damit eine größere Abnahme oder eine Zunahme der effektiven Aussparungsflächen stattfinden kann.

Wenn die obere Innenelektrode sich beispielsweise um 50 µm nach links verschoben hat, wird jede effektive Aussparungsfläche um 50 µm verlängert. In dem Fall, wo orthogonal benachbarte Aussparungen gleich breit sind und je eine Breite von 2 mm aufweisen, wird bei einer Anzahl von 4 effektiven Aussparungsflächen und bei der Verschiebung um 50 µm eine Vergrößerung der Summe der effektiven Aussparungsflächen um 0,4 µm² erreicht. Eine Verschiebung einer einzigen Aussparung beispielsweise mit größerer Länge im Vergleich zu den zuvor genannten Aussparungen aber mit derselben Breite hätte lediglich eine Vergrößerung von 0,1 µm² zur Folge. Somit ist es von Vorteil, jede Innenelektrode mit mehreren Aussparungen zu versehen.

Eine Reduzierung der jeweiligen Aussparungsflächen ist bei Verwendung von mehreren Aussparungen möglich, bei gleichen Kompensationseigenschaften. Der Vorteil liegt in einer größeren Stromtragfähigkeit der Innenelektroden.

Figur 7b zeigt eine Ansicht auf die Unterseite des mit der Figur 7a vorgestellten elektrischen Vielschichtbauelements 1.

Figur 8 ist eine perspektivische Darstellung des mit den Figuren 7a und 7b vorgestellten elektrischen Vielschichtbauelements, die zeigt, dass jedes Loch einer jeden Innenelektrode 3 in orthogonaler Projektion ein Loch einer weiteren Innenelektrode zumindest teilweise überlappt.

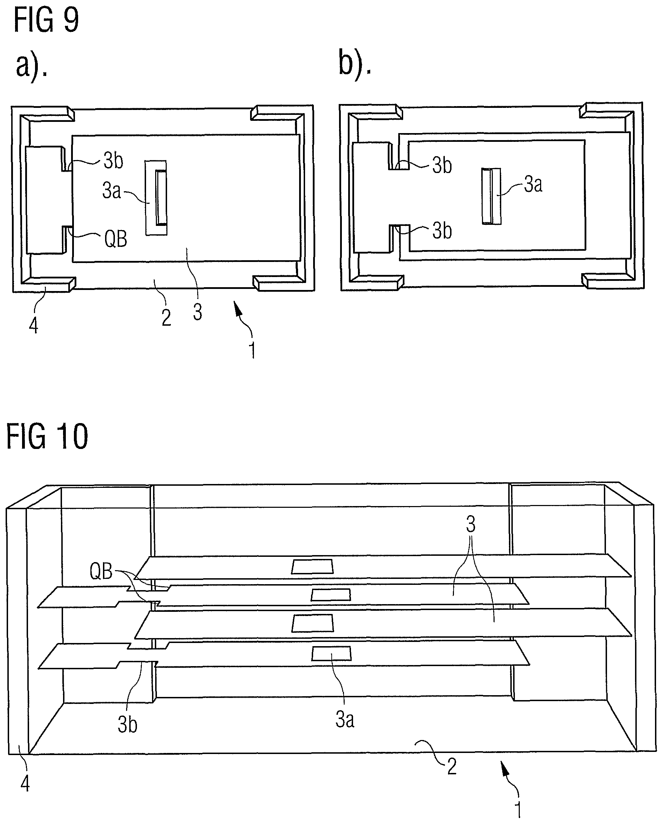

Figur 9a ist eine Draufsicht auf die Oberseite eines alternativen elektrischen Vielschichtbauelements 1, das durch in einem keramischen Grundkörper 2 angeordnete Innenelektroden gekennzeichnet ist, die unterschiedliche Arten von Aussparungen aufweisen. Dabei ist eine Art einer Aussparung in der Verengung 3b der Breite eines Bereichs einer Innenelektrode 3, und eine andere Art im rechteckigen Loch 3a einer Innenelektrode zu sehen.

Eine Aussparung einer Innenelektrode 3 in der Form einer Verengung 3b hat den Vorteil, dass relative Querversätze der Innenelektroden untereinander im Sinne der Figuren 2a bis 2c sowie Figuren 4c und 4d kompensiert werden können. Diese Ausführungsform ist also besonders geeignet, um jeden Versatz einer oder mehrerer Innenelektroden innerhalb einer X-Y Ebene zu kompensieren, parallel zu der zwischen den Seitenflächen, auf denen die Außenkontakte 4 aufgebracht sind, die Innenelektroden liegen. Auch hier weisen die Innenelektroden in abwechselnder Stapelweise unterschiedliche Breiten auf, um eine Querversatzkompensation gemäß der Beschreibung zu den Figuren 2 und 3 zu erlauben.

Die Breite des verengten Bereichs einer Innenelektrode entspricht vorzugsweise der Breite eines Lochs derselben Elektrode. Somit wird die Zunahme der Kapazität, die im Bereich der Verengung durch eine Längsverschiebung stattfinden könnte, gerade durch das Loch mit geeignetem Maße am anderen Ende kompensiert.

Es wird bevorzugt, die Aussparungen abseits eines Innenelektrodenendes, das mit einem Außenkontakt verbunden ist, anzuordnen. Dadurch wird erreicht, dass die elektrischen Stromlinien der Innenelektrode nahe des Außenkontakts möglichst regelmäßig gestaltet werden und ein elektrischer Flaschenhalseffekt, der zu einer verringerten Stromtragfähigkeit führen könnte, weitgehend vermieden wird.

Figur 9b zeigt eine Ansicht auf die Unterseite des mit der Figur 9a vorgestellten elektrischen Vielschichtbauelements 1, wobei der verjüngte Bereich der untersten Innenelektrode unabgedeckt dargestellt ist. Die Verjüngung der Innenelektrode hinsichtlich ihrer Breite ist auch als Steg zwischen breiteren Bereichen der Innenelektroden zu verstehen und verbindet diese. Dabei wird die Breite eines Stegs in Abhängigkeit der zu erwartenden Querverschiebungen der Innenelektroden während der Herstellung des Vielschichtbauelements gewählt.

Figur 10 ist eine perspektivische Ansicht des mit den Figuren 9a und 9b dargestellten elektrischen Vielschichtbauelements 1, anhand derer die Überlappung sowohl der verengten Bereiche 3b der Innenelektroden 3 als auch die Überlappung von rechteckigen Löchern der Innenelektroden in orthogonaler Projektion dargestellt wird.

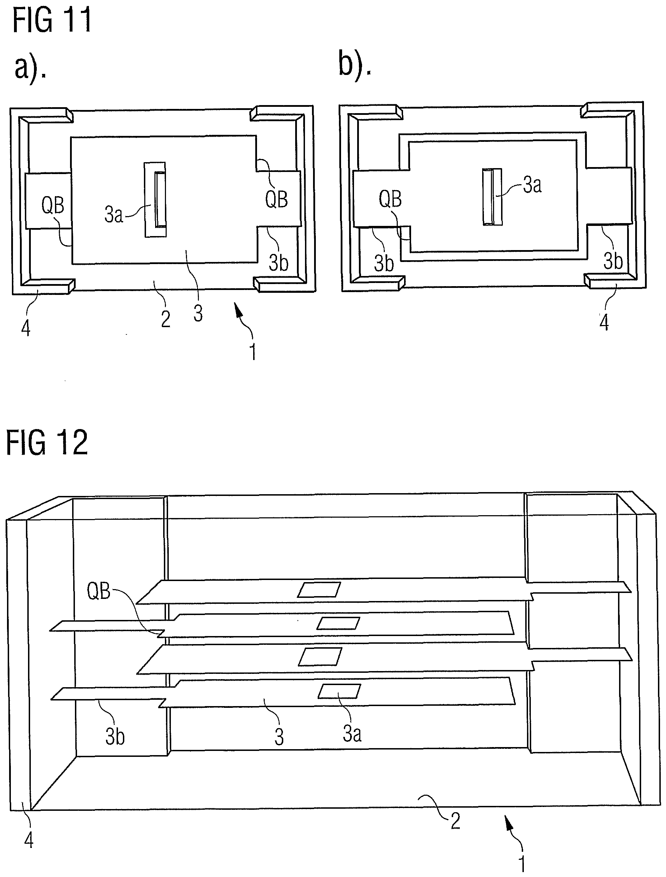

Figuren 11a und 11b zeigen als Draufsicht und als Ansicht von unten ein elektrisches Vielschichtbauelement 1 in dem mehrere Innenelektroden 3 abwechselnd mit keramischen Schichten in einem keramischen Grundkörper 2 angeordnet sind, wobei die Innenelektroden jeweils einen bis an einen Außenanschluss 4 reichenden, verengten Bereich 3b sowie ein rechteckiges Loch 3a aufweisen. Am Übergang zwischen dem verengten Bereich und dem restlichen Bereich einer Innenelektrode ist eine Querbegrenzung QB vorhanden. Dies ist einerseits günstig, um mittels der Stege Querversätze der Innenelektroden untereinander zu kompensieren, andererseits jedoch auch um sowohl die Herstellung der Innenelektroden gegenüber dem vorherigen Ausführungsbeispiel zu vereinfachen als auch eine Kontaktierung der Innenelektroden mit gegebenenfalls schmalen Außenanschlüssen 4 (hier jedoch nicht als schmal dargestellt) zu ermöglichen. Auch hier weisen die Innenelektroden in abwechselnder Weise unterschiedliche Breiten auf, um eine Querversatzkompensation zu erlauben.

Eine Verschiebung der ersten in Figur 11a gezeigten Innenelektrode nach links hat den Effekt einer lediglich geringfügigen Kapazitätszunahme beginnend in dem Bereich, wo die obere Innenelektrode sich orthogonal oberhalb des verengten Bereichs der teilweise darunter versteckten Innenelektrode befindet. Jedoch wird diese Kapazitätszunahme durch die Vergrößerung der effektiven Aussparungsfläche zwischen beiden Elektroden wieder kompensiert, die durch die Überlagerung der Aussparungen 3a erzeugt wird.

Figur 12 ist eine perspektivische Ansicht auf das mit den Figuren 11a und 11b vorgestellte elektrische Vielschichtbauelement 1.

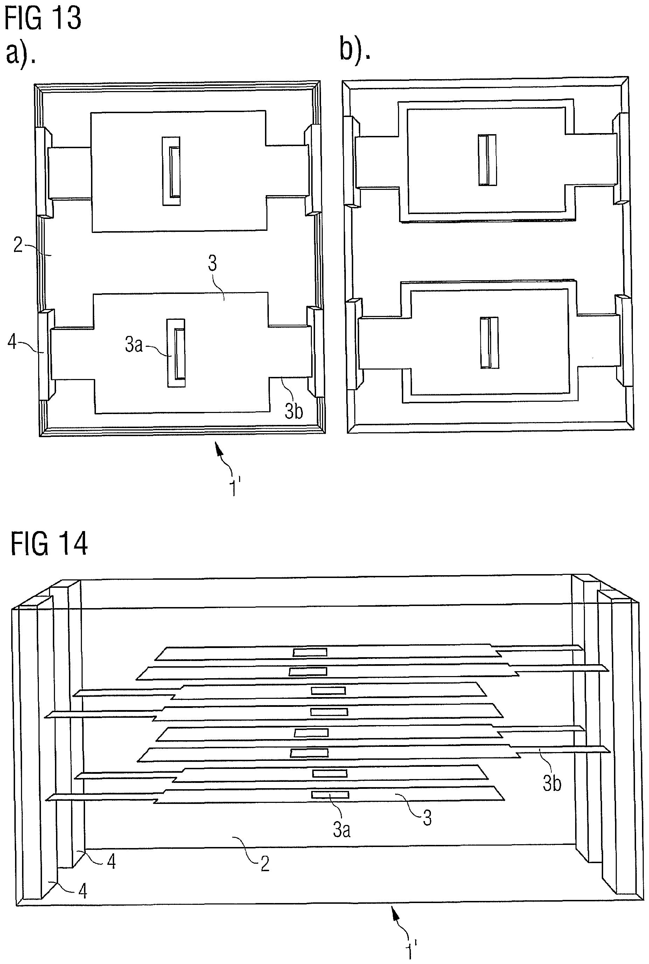

Figuren 13a und 13b zeigen als Draufsicht und als Ansicht von unten ein elektrisches Vielschichtbauelementmodul 1', das zwei nebeneinander angeordnete Stapel von Innenelektroden 3 aufweist, die in einem gemeinsamen Grundkörper 2 angeordnet sind. Die Anordnung und Form der Innenelektroden 3 eines jeden Innenelektrodenstapels entspricht derjenigen aus Figur 12a.

Mit der Figur 14 wird die Anordnung der Innenelektroden 3 innerhalb zweier Innenelektrodenstapel in perspektivischer Darstellung gezeigt, wobei die Innenelektroden in einer X-Y Ebene, die zu unterschiedlichen Stapeln gehören, dieselbe Orientierung aufweisen, d.h., Spiegelbilder voneinander um eine Symmetrieachse sind, die mittig in Längsrichtung durch das Bauelementmodul 1' verläuft.

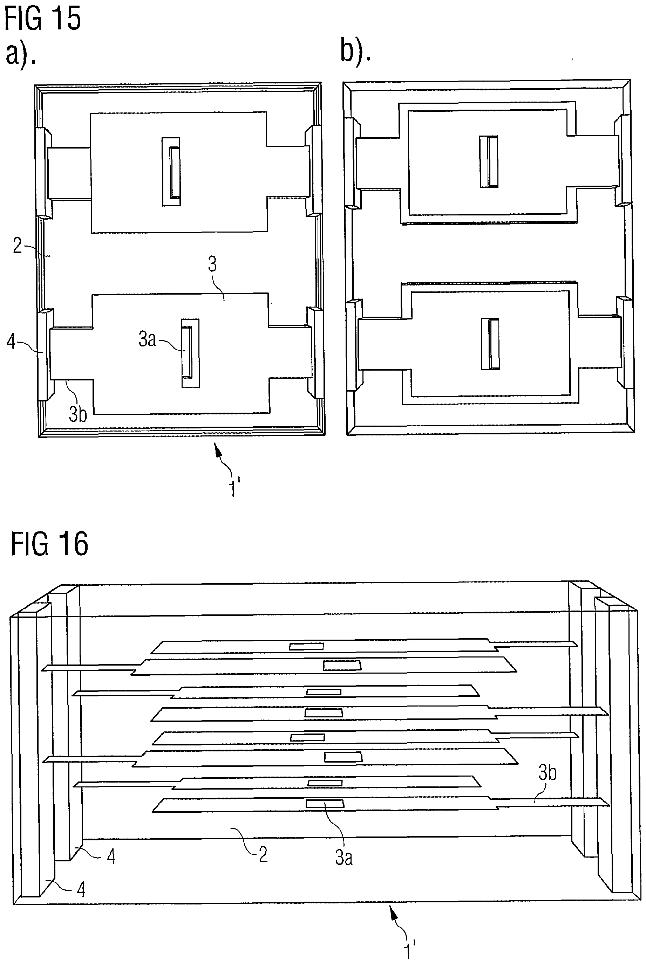

Figuren 15a und 15b zeigen als Draufsicht und als Ansicht von unten jeweils ein elektrisches Vielschichtbauelementmodul 1', das zwei nebeneinander angeordnete Stapel von Innenelektroden 3 aufweist, die in einem gemeinsamen Grundkörper 2 angeordnet sind. Die Anordnung und Form der Innenelektroden 3 eines jeden Stapels entspricht derjenigen aus Figur 12a. Im Gegensatz zum Ausführungsbeispiel nach den Figuren 13 und 14 weisen die Innenelektroden in einer X-Y Ebene, die zu unterschiedlichen Stapeln gehören, unterschiedliche Orientierungen auf. Stattdessen ist beispielsweise jeder verjüngter Bereich einer Innenelektrode eines Stapels mit einem Außenkontakt auf einer anderen Seite des Vielschichtbauelements kontaktiert, als es bei der Innenelektrode in derselben Ebene im anderen Stapel der Fall ist. Auch hier weisen die Innenelektroden eines jeden Stapels in abwechselnder Wiese unterschiedliche Breiten auf, um eine Querversatzkompensation zu erlauben.

Figur 16 ist eine perspektivische Ansicht der mit den Figuren 15a und 15b vorgestellten elektrischen Vielschichtbauelements 1'.

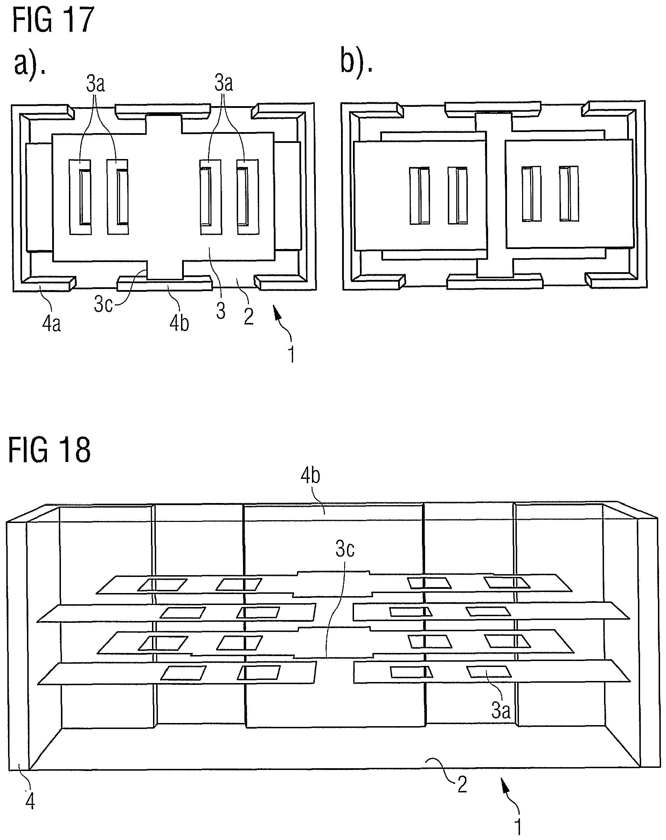

Figur 17a zeigt als Draufsicht ein elektrisches Vielschichtbauelement 1, in dem mehrere in einem keramischen Grundkörper 2 angeordnete Innenelektroden 3 mehrere Löcher 3a aufweisen.

Diejenigen Innenelektroden 3, die mit einem und demselben Außenanschluss 4 eines ersten Pols kontaktiert sind, weisen möglichst identische Formen auf. In diesem Ausführungsbeispiel weisen die Innenelektroden, die mit dem Außenanschluss 4b kontaktiert sind, eine im Wesentlichen kreuzförmige Form auf, wobei das Kopfende und das Fußende dieser Kreuzform mit je einem Außenanschluss kontaktiert ist, und diese Außenanschlüsse auf gegenüber liegenden Seitenflächen des quaderförmigen Grundkörpers aufgebracht sind. Die beiden anderen Enden dieser kreuzförmigen Innenelektroden 3 sind dagegen nicht mit einem Außenanschluss kontaktiert. Die Arme der Innenelektroden dieses Typs weisen jeweils mehrere, insbesondere zwei, rechteckige Löcher auf, die sich mit den Löchern benachbarter Innenelektroden teilweise überlappen.

Figur 17b zeigt als Ansicht auf die Unterseite des mit der Figur 17a vorgestellten elektrischen Vielschichtbauelements 1, wie die Innenelektroden, die an einem Ende mit einem Außenanschluss 4 eines zweiten Pols kontaktiert sind, eine gegenüber den kreuzförmigen Innenelektroden andere Form aufweisen. Diese ist im Wesentlichen rechteckig und weist mehrere langgestreckte rechteckige Löcher auf. Auch hier weisen die Innenelektroden in abwechselnder Weise unterschiedliche Breiten auf, um eine Querversatzkompensation zu erlauben. Es werden insbesondere zwei mit Aussparungen versehene, rechteckige Innenelektroden innerhalb einer Ebene des Vielschichtbauelements gezeigt, die sich beide mit der gemeinsamen, kreuzförmigen Innenelektrode in Stapelweise abwechseln. Es wird gezeigt, wie je zwei Löcher der rechteckigen Innenelektroden mit den Löchern der kreuzförmigen Innenelektrode effektive Aussparungsflächen bilden.

Figur 18 ist eine perspektivische Ansicht des elektrischen Vielschichtbauelements 1, mit der gezeigt wird, wie die unterschiedlich geformten, d.h. einerseits kreuzförmigen und andererseits im Wesentlichen rechteckförmigen Innenelektroden in abwechselnder Weise in einem keramischen Grundkörper angeordnet sind. Die kreuzförmige Innenelektrode könnte beispielsweise eine Masseelektrode sein. Die rechteckförmigen Innenelektroden können auf gleichem oder auf unterschiedlichem Potential liegen.

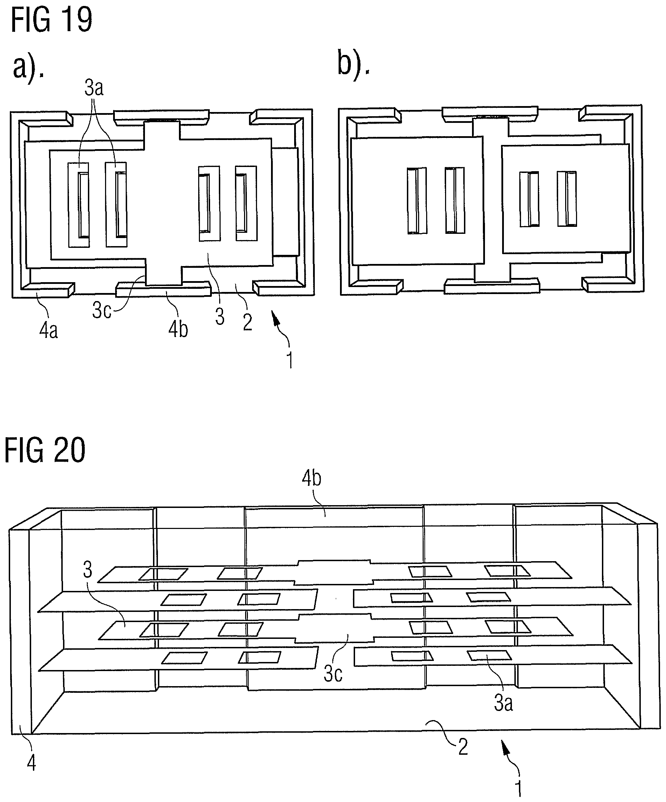

Figur 19a zeigt als Draufsicht ein elektrisches Vielschichtbauelement 1, in dem mehrere in einem keramischen Grundkörper 2 angeordnete Innenelektroden 3 mehrere Löcher 3a aufweisen. Diejenigen Innenelektroden 3, die mit einem und demselben Außenanschluss 4 eines ersten Pols kontaktiert sind, weisen identische Formen auf. In diesem Ausführungsbeispiel weisen die Innenelektroden, die mit dem Außenanschluss 4b kontaktiert sind, eine im Wesentlichen kreuzförmige Form auf, wobei das Kopfende und das Fußende dieser Kreuzform mit je einem Außenanschluss kontaktiert ist, und diese Außenanschlüsse auf gegenüber liegenden Seitenflächen des quaderförmigen Grundkörpers aufgebracht sind. Die beiden anderen Enden der Innenelektroden 3 sind dagegen nicht mit einem Außenanschluss kontaktiert. Die Querarme der kreuzförmigen Innenelektroden sind unterschiedlich breit ausgeführt, um eine relative Querversatzkompensation gegenüber einer benachbarten Innenelektrode in einer anderen Ebene des Grundkörpers zu ermöglichen. Die Querarme weisen jeweils mehrere, insbesondere zwei, rechteckige Löcher auf, die zur Kompensation von Längsversätzen dienen. Auch hier können die Löcher benachbarter, in unterschiedlichen Ebenen liegenden Innenelektrode unterschiedlich breit ausgeführt sein, um eine zusätzliche Querversatzkompensation zu erlauben.

Figur 19b zeigt als Ansicht auf die Unterseite des mit der Figur 17a vorgestellten elektrischen Vielschichtbauelements 1, wie die Innenelektroden, die an einem Ende mit einem Außenanschluss 4 eines zweiten bzw. dritten Pols kontaktiert sind, eine gegenüber den kreuzförmigen Innenelektroden andere Form aufweisen. Diese ist im Wesentlichen rechteckig und weist mehrere langgestreckte rechteckige Löcher auf. Auf eine Seite sind die Innenelektroden jedoch breiter ausgeführt, als auf der anderen. Insbesondere ist auf der einen Seite des elektrischen Vielschichtbauelements die Breite der im Wesentlichen rechteckigen Innenelektroden geringer, als die Breite der abwechselnd oberhalb ihnen liegenden Arme der kreuzförmigen Innenelektroden. Auf der anderen Seite des elektrischen Vielschichtbauelements ist das Gegenteil der Fall: die Breite der im Wesentlichen rechteckigen Innenelektroden ist größer, als die Breite der abwechselnd oberhalb ihnen liegenden Arme der kreuzförmigen Innenelektroden.

Figur 20 ist eine perspektivische Ansicht des mit den Figuren 19a und 19b vorgestellten elektrischen Vielschichtbauelements 1 und zeigt, wie die Innenelektroden unterschiedlicher Ausgestaltung in abwechselnder Weise übereinander angeordnet sind.

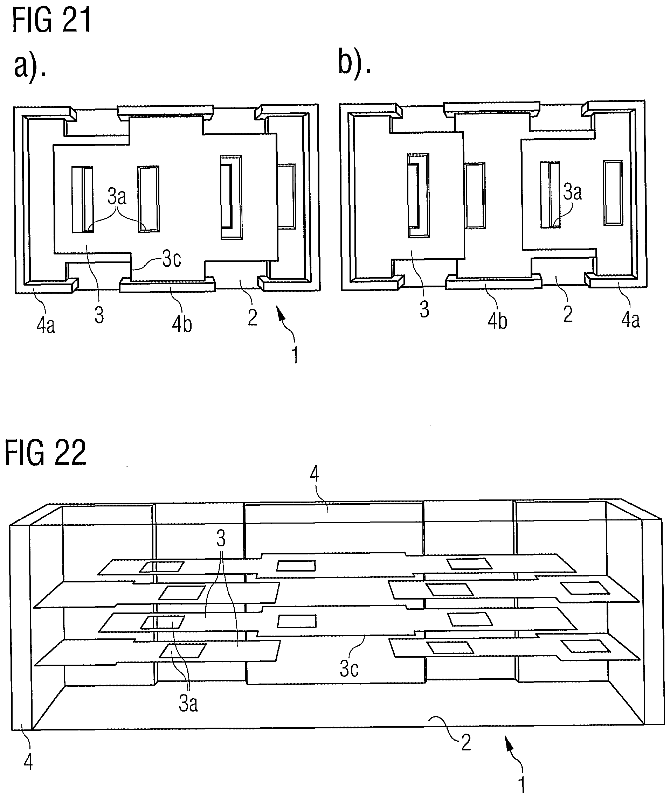

Figur 21a ist eine Draufsicht auf ein alternatives elektrisches Vielschichtbauelement 1, in dem mehrere in einem keramischen Grundkörper 2 angeordnete Innenelektroden 3 mehrere rechteckige Löcher 3a aufweisen. Diejenigen Innenelektroden 3, die mit einem und demselben Außenanschluss 4 eines ersten Pols bzw. zweier Pole kontaktiert sind, weisen möglichst identische Formen auf. Die Innenelektroden, die mit dem Außenanschluss 4b kontaktiert sind, weisen eine im Wesentlichen kreuzförmige Form auf, wobei das Kopfende und das Fußende dieser Kreuzform mit je einem Außenanschluss 4b kontaktiert ist, und diese Außenanschlüsse auf gegenüber liegenden Seitenflächen des quaderförmigen Grundkörpers aufgebracht sind. Die beiden anderen Enden der Innenelektroden 3 sind dagegen nicht mit einem Außenanschluss kontaktiert. Die Querarme der kreuzförmigen Innenelektroden sind unterschiedlich breit ausgeführt. Die Innenelektroden sind mit mehreren, lang gestreckten rechteckigen Löchern 3a ausgebildet, insbesondere drei, die jeweils unterschiedliche Größen aufweisen und ungleichmäßig voneinander entfernt sind.

Figur 21b zeigt die Ansicht auf die Unterseite des mit der Figur 21a vorgestellten elektrischen Vielschichtbauelements 1, wie die Innenelektroden, die an einem Ende mit einem Außenanschluss 4 eines zweiten bzw. dritten Pols kontaktiert sind, eine gegenüber den kreuzförmigen Innenelektroden andere Form aufweisen. Dabei sind diese Innenelektroden derart geformt, dass ihre Ränder nahezu oder möglichst vollständig mit der Innenkontur der ihnen zugeordneten Außenanschlüsse kontaktiert sind. An den Außenanschlüssen haben diese Innenelektroden also die volle Breite des Grundkörpers des Bauelements. Aus dem mit den Außenanschlüssen verbundenen Teil heraus ist eine Zunge bzw. eine Verengung der Innenelektroden geformt, die in den Innenraum des elektrischen Vielschichtbauelements ragt. Diese Innenelektroden können eine unterschiedliche Anzahl von Löchern 3a in unterschiedlicher Größe aufweisen. Insbesondere können auch Löcher in demjenigen Bereich der Innenelektroden vorhanden sein, dessen Rand mit der Innenkontur eines für diese Innenelektroden zugeordneten Außenanschlusses verbunden ist. Auf eine Seite sind die Innenelektroden jedoch breiter ausgeführt als auf der anderen. In Kombination mit den Aussparungen der kreuzförmigen Elektrode wird eine Querversatzkompensation erreicht. Insbesondere ist auf der einen Seite des elektrischen Vielschichtbauelements die Breite der im Wesentlichen rechteckigen Innenelektroden geringer als die Breite der abwechselnd oberhalb ihnen liegenden Arme der kreuzförmigen Innenelektroden. Auf der anderen Seite des elektrischen Vielschichtbauelements ist das Gegenteil der Fall: die Breite der im Wesentlichen rechteckigen Innenelektroden ist größer als die Breite der abwechselnd oberhalb ihnen liegenden Arme der kreuzförmigen Innenelektroden.

Die Figuren 21a und 21b zeigen außerdem, wie das mit einem Außenkontakt verbundene Ende einer Innenelektrode an die innere Kappenform der stirnseitig aufgebrachten Außenelektrode angepasst ist. Somit wird eine formschlüssige Anbindung der Innenelektrode mit dem Außenkontakt erreicht, welches eine besonders gute elektrische Ladung der Innenelektrode zur vorteilhaften Folge hat, da die elektrischen Stromlinien in diesem Bereich verhältnismäßig gleichmäßig und nicht verengt ausfallen. Eine möglichst formschlüssige und breite Anbindung der Innenelektroden mit Außenanschlüssen hat den Vorteil eines induktivitätssenkenden Effekts.

Figur 22 ist eine perspektivische Ansicht auf das mit den Figuren 21a und 21b vorgestellten elektrischen Vielschichtbauelements, die zeigt, wie mit unterschiedlichen Außenanschlüssen kontaktierte Innenelektroden mit unterschiedlichen Formen und unterschiedlich geformten Löchern abwechseln übereinander gestapelt sind. Es wird gezeigt, wie die Aussparungen unterschiedlich geformter und benachbarter Innenelektroden sich in orthogonaler Projektion überlagern.

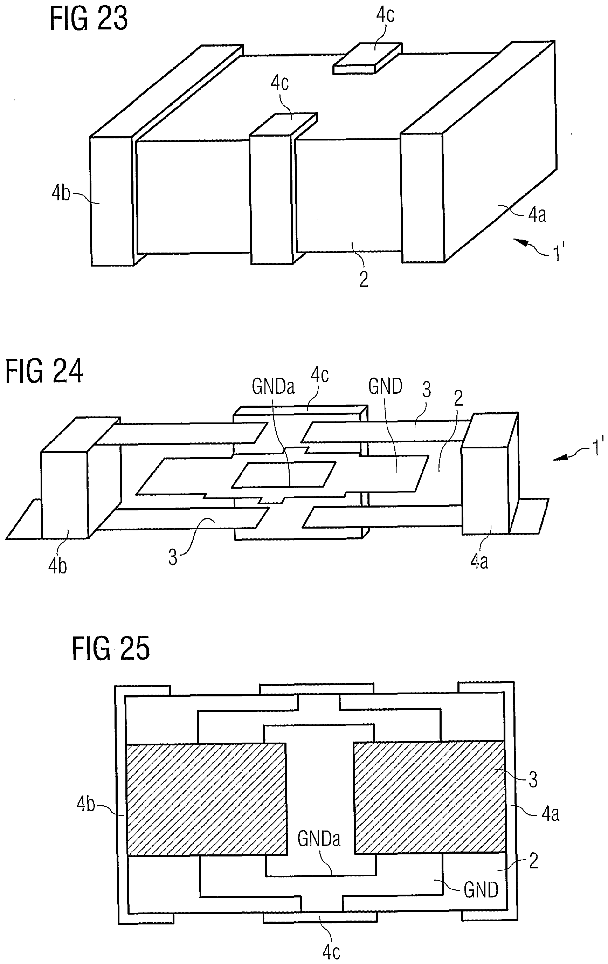

Figur 23 zeigt eine geschlossene perspektivische Ansicht eines elektrischen Vielschichtbauelementmoduls 1', das zwei Innenelektrodenstapel in einem gemeinsamen keramischen Grundkörper 2 aufweist, deren Innenelektroden an einem Ende mit einem zugeordneten Außenanschluss kontaktiert sind. Die Innenelektrodenstapel können zusammen mit den keramischen Schichten des Grundkörpers je nach Zusammensetzung des Keramikmaterials einzelne Kondensatoren oder Varistoren bilden.

Figur 24 zeigt in vereinfachter Form das Innenleben des mit der Figur 23 von außen betrachteten elektrischen Vielschichtbauelementmoduls 1'. Insbesondere wird eine im Wesentlichen kreuzförmige Masseelektrode GND mit einem zentralen Loch GNDa gezeigt, die auf zwei Seiten mit jeweils einem Außenanschluss 4c kontaktiert ist (nur die rückseitige Kontaktierung ist in der Figur sichtbar). Die Masseelektrode könnte also auch als rahmenförmig bezeichnet werden. Mit einem Loch dieser Art können Verschiebungen der darüber liegenden Innenelektroden 3 bzw. deren Endbereiche keine Auswirkung auf die Kapazität haben. Es ist dabei nicht zwingend erforderlich, dass die der rahmenförmigen Innenelektrode benachbarten Innenelektroden 3 selbst Löcher aufweisen. Die rechteckflächigen Innenelektroden sind ihrerseits jeweils an einem Ende mit einem zugeordneten Außenanschluss 4a oder 4b kontaktiert. Obwohl in dieser Figur lediglich drei Innenelektrodenschichten, wobei die Masseelektrode mitgezählt wird, aufweist, können eine weit größere Anzahl von Elektroden nach der hier vorgestellten Anordnung in einem einzigen keramischen Grundkörper angeordnet werden.

Figur 25 zeigt eine Draufsicht auf das mit der Figur 24 gezeigte elektrische Vielschichtbauelement 1. Die Rahmenform der Masseelektrode GND mit ihrem zentralen, rechteckigen Loch GNDa ist derart im Grundkörper angeordnet, dass etwaige Längsverschiebungen von Innenelektroden 3 sich oberhalb bzw. unterhalb dieses Lochs GNDa befinden und daher keine Zunahme an einer kapazitiv wirksamen gemeinsamen Fläche stattfindet.

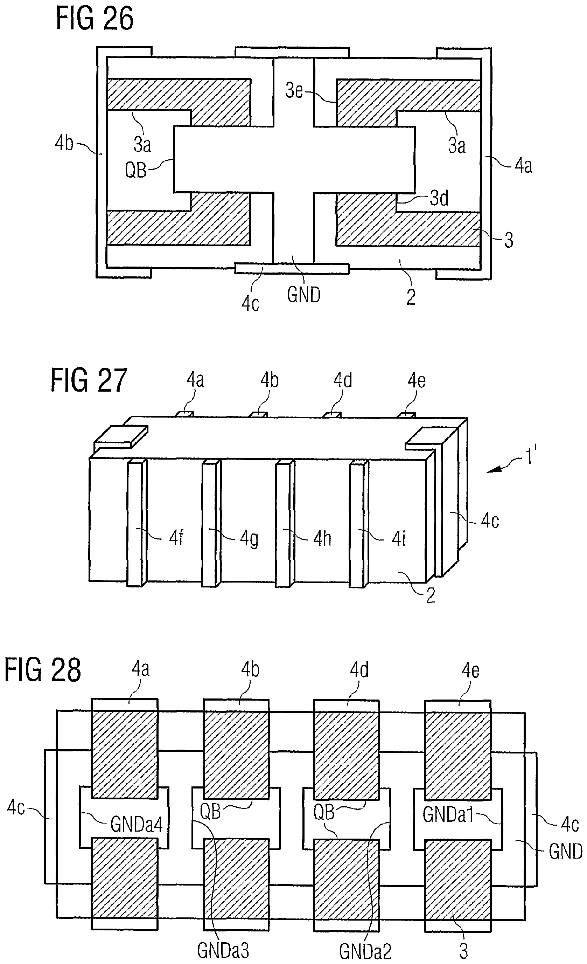

Figur 26 zeigt eine Draufsicht auf einen Schnitt eines alternativen elektrischen Vielschichtbauelements 1. Dabei wird die Masseelektrode GND kreuzförmig und ohne Löcher ausgebildet; die Innenelektroden 3 sind dagegen eckig hufeisenförmig ausgebildet, wobei das offene Ende der Hufeisenform von der Masseelektrode abgewandt ist. Die Enden einer jeden hufeisenförmigen Innenelektrode 3 sind dabei jeweils mit einem zugeordneten Außenanschluss 4a oder 4b kontaktiert. Eine Längsverschiebung der Innenelektroden in den Grundkörper hinein könnte solange kompensiert werden, bis die Innenelektroden mit ihren der Masseelektrode zugewandten Seiten 3e die Masseelektrode treffen würden. Eine Verschiebung der Innenelektroden von der Masseelektrode weg könnte solange kompensiert werden, bis deren Querabschnitte 3d das Ende des Querarms der kreuzförmigen Masseelektrode treffen würden.

Es werden neben den einzelnen Vielschichtbauelementen auch Vielschichtbauelementmodule vorgeschlagen, in denen mehrere Vielschichtbauelemente mit oder ohne gemeinsamen Grundkörper nebeneinander angeordnet sind. Da die Vielschichtbauelemente jeweils Längs- bzw. Querversatzinvariante Innenelektrodenstapel in der beschriebenen genannten Art und Weise aufweisen, ist zwischen diesen Vielschichtbauelementen kaum noch eine Streuung ihrer elektrischen Eigenschaften, wie zum Beispiel der Kapazität, zu verzeichnen. Somit können mehrere Signale, die durch ihnen zugeordnete Vielschichtbauelemente des Moduls geführt werden, untereinander nur äußerst geringe Verzerrungen aufweisen. Es werden somit also Vielschichtbauelementmodule geschaffen, die ausgezeichnete Filtereigenschaften aufweisen können, insbesondere dann, wenn mehrere Signale durch die unterschiedlichen Vielschichtbauelemente geführt werden.

Wenn zwischen mehreren Vielschichtbauelementen eines Moduls eine oder mehrere gemeinsame Masseelektroden vorhanden sind, kann eine elektrische Kopplung der Vielschichtbauelemente untereinander erreicht werden.

Figur 27 ist eine Außenansicht eines elektrischen Vielschichtbauelementmoduls 1' mit einer Vielzahl von integrierten, separaten, jedoch innerhalb eines gemeinsamen Grundkörpers 2 angeordneten Innenelektrodenstapeln. Außen ist das elektrische Vielschichtbauelementmodul 1' mit einer Vielzahl von vertikal verlaufenden Außenanschlüssen 4a bis 4i versehen, welche jeweils mit einem zugeordneten Innenelektrodenstapel kontaktiert sind, wobei unter den Innenelektrodenstapeln auch ein Stapel mit Masseelektroden GND vorhanden ist. Diese sind dann mit einem Masseanschluss 4c kontaktiert.

Figur 28 ist ein Schnittbild des mit der Figur 27 vorgestellten elektrischen Vielschichtbauelementmoduls 1' und zeigt, wie die Innenelektroden aus jedem Innenelektrodenstapel einer Ebene nebeneinander angeordnet sind. Es wird eine Masseelektrode gezeigt, die die Form eines Gitters, Netzes oder einer Kombination mehrerer nebeneinander angeordneter Rahmen aufweist. Die Masseelektrode GND weist daher mehrere Löcher GNDa1 bis GNDa4 auf. Die Masseelektrode ist vorzugsweise zwischen jeder Ebene von Innenelektroden derart angeordnet, dass in den Innenraum des Vielschichtbauelements versetzte Innenelektrodenenden in orthogonaler Projektion ein Loch der gitterförmigen Masseelektrode abdecken, damit eine Kompensation für diesen Versatz ermöglicht wird.

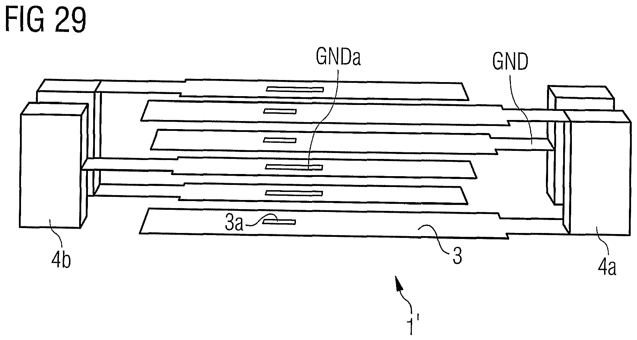

Figur 29 zeigt ein elektrisches Vielschichtbauelementmodul 1', bei dem zwei Innenelektrodenstapel in lateralem Sinne nebeneinander angeordnet sind. Die Innenelektroden 3 und GND weisen dabei im Wesentlichen solche Formen auf, wie sie in den Figuren 11 bis 16 dargestellt sind. Diese im Wesentlichen spatenförmigen Innenelektroden weisen ebenfalls sich in orthogonaler Weise überlappende Aussparungen auf; diese sind hier jedoch mit unterschiedlichen Längen ausgeführt. Da es hinsichtlich einer Versatzkompensation lediglich auf die effektive Aussparungsfläche benachbarter Innenelektroden ankommt, kann die Lochgröße einer jeden Elektrode von der für diese Innenelektrode benötigten elektrischen Ladefläche abhängig sein.

Es wird gezeigt, wie bei einem ersten Vielschichtbauelement eine dunkel dargestellte Innenelektrode GND ein Loch mit einer geringeren Länge aufweist als das Loch einer benachbarten, zum selben Vielschichtbauelement gehörenden und in einer anderen Ebene befindlichen Innenelektrode 3. Dabei kann die Innenelektrode mit dem kleineren Loch eine größere elektrische Ladung tragen als die benachbarte Innenelektrode. Die dunkel dargestellte Innenelektrode könnte beispielsweise eine Masseelektrode sein. Im anderen Vielschichtbauelement des Moduls wird genau das Umgekehrte gezeigt: hier weist die Masseelektrode GND eine im Vergleich zu ihren benachbarten Innenelektroden eine kleinere Aussparung GNDa auf, sodass die Masseelektrode eine geringere Ladung tragen kann.

### Bezugszeichenliste

- VF: Versatzfläche
- BF: Bezugsfläche
- QB: Querbegrenzung
- GND: Masseelektrode
- GNDa: Loch einer Masseelektrode
- GNDa1 bis GNDa4: Löcher einer Masseelektrode
- 1: elektrisches Vielschichtbauelement
- 1': elektrisches Vielschichtbauelementmodul
- 2: keramischer Grundkörper
- 3: Innenelektrode
- 3a: Loch einer Innenelektrode
- 3b: verengter Bereich einer Innenelektrode
- 3c: aufgeweiteter Bereich einer Innenelektrode
- 3d: Querabschnitt einer hufeisenförmigen Innenelektrode
- 3e: nach innen gerichtetes Ende einer hufeisenförmigen Innenelektrode
- 4: Außenanschluss
- 4a bis 4i: unterschiedlichen Innenelektroden zugeordnete Außenanschlüsse

## Patentansprüche

1. Elektrisches Vielschichtbauelement (1) mit mehreren Innenelektroden (3, GND), die Kapazitäten bilden, bei dem wenigstens eine Innenelektrode eine Querbegrenzung (QB) aufweist, die sich in orthogonaler Projektion in einer Aussparung einer benachbarten Innenelektrode befindet, wobei die Aussparung der benachbarten Innenelektrode ein Loch ist und die Innenelektroden zumindest an einem Ende mit einem auf den keramischen Grundkörper aufgebrachten Außenkontakt (4, 4a bis 4i) kontaktiert sind,
**dadurch gekennzeichnet, dass**
die Innenelektrode (3) mindestens zwei Löcher (3a) aufweist, die die Querbegrenzung (QB) bilden,
die benachbarte Innenelektrode (3a) mindestens zwei Löcher (3a) aufweist und
jedes der Löcher (3a) der Innenelektrode (3) mit einem der Löcher (3a) der benachbarten Innenelektrode (3) überlappt.

2. Elektrisches Vielschichtbauelement nach Anspruch 1, bei dem das Loch rechteckig ist.

3. Elektrisches Vielschichtbauelement nach einem der Ansprüche 1 oder 2, bei dem die Querbegrenzung (QB) das dem Innenraum des keramischen Grundkörpers (2) zugewandte Ende mindestens einer Innenelektrode (3, GND) ist.

4. Elektrisches Vielschichtbauelement nach einem der Ansprüche 1 oder 2, bei dem die Querbegrenzung (QB) durch mindestens eine Aussparung (3a, 3b, GNDa) mindestens einer Innenelektrode gebildet ist.

5. Elektrisches Vielschichtbauelement nach Anspruch 4, bei dem als Querbegrenzung (QB) die mindestens eine Aussparung (3a, 3b, GNDa) als Verengung (3b) mindestens einer Innenelektrode (3, GND) ausgeführt ist.

6. Elektrisches Vielschichtbauelement nach einem der vorhergehenden Ansprüche, bei dem die Innenelektroden (3, GND) unterschiedlich große Flächen aufweisen.

7. Elektrisches Vielschichtbauelement nach einem der vorhergehenden Ansprüche, bei dem die Innenelektroden (3, GND) unterschiedlich breit ausgeführt sind.

8. Elektrisches Vielschichtbauelement nach einem der vorhergehenden Ansprüche, bei dem zumindest eine der Innenelektroden (3, GND) kreuzförmig ist.

9. Elektrisches Vielschichtbauelement nach einem der vorhergehenden Ansprüche, bei dem zumindest eine der Innenelektroden (3, GND) eine Masseelektrode (GND) ist.

10. Elektrisches Vielschichtbauelement nach einem der vorhergehenden Ansprüche, bei dem der Außenkontakt (4, 4a bis 4i) ein Metallisierungsstreifen aufweist.

11. Elektrisches Vielschichtbauelement nach einem der vorhergehenden Ansprüche, bei dem der keramische Grundkörper (2) mehrere Außenkontakte (4, 4a bis 4i) aufweist, die jeweils mit einem Ende mindestens einer Innenelektrode (3, GND) verbunden sind.

12. Elektrisches Vielschichtbauelement nach einem der vorhergehenden Ansprüche, das ein keramischer Vielschichtkondensator ist.

13. Elektrisches Vielschichtbauelement nach einem der Ansprüche 1 bis 11, das ein Vielschichtvaristor ist.

14. Elektrisches Vielschichtbauelementmodul (1'), das mehrere elektrische Vielschichtbauelemente (1) nach einem der vorhergehenden Ansprüche umfasst, die nebeneinander in einem gemeinsamen keramischen Grundkörper (2) angeordnet sind.

15. Elektrisches Vielschichtbauelementmodul nach Anspruch 14, bei dem die Innenelektroden (3, GND) mehrere separate Innenelektrodenstapel bilden, die jeweils mit einem auf den Grundkörper (2) aufgebrachten Außenkontakt (4, 4a bis 4i) kontaktiert sind.

## Claims

1. Electrical multilayer component (1) comprising a plurality of internal electrodes (3, GND) which form capacitances, wherein at least one internal electrode has a transverse boundary (QB) which, in orthogonal projection is situated in a cutout of an adjacent internal electrode wherein the cutout of the adjacent internal electrode is a hole and the internal electrodes are contacted at least at one end with an external contact (4, 4a to 4i) applied to the ceramic main body,
**characterized in that**
the internal electrode (3) has at least two holes (3a) which form the transverse boundary (QB),
the adjacent internal electrode (3a) has at least two holes (3a) and
each of the holes (3a) of the internal electrode (3) overlaps one of the holes (3a) of the adjacent internal electrode (3).

2. Electrical multilayer component according to Claim 1, wherein the hole is rectangular.

3. Electrical multilayer component according to either of Claims 1 and 2, wherein the transverse boundary (QB) is that end of at least one internal electrode (3, GND) which faces the interior of the ceramic main body.

4. Electrical multilayer component according to either of Claims 1 and 2, wherein the transverse boundary (QB) is formed by at least one cutout (3a, 3b, GNDa) of at least one internal electrode.

5. Electrical multilayer component according to Claim 4, wherein as transverse boundary (QB) the at least one cutout (3a, 3b, GNDa) is embodied as a constriction (3b) of at least one internal electrode (3, GND).

6. Electrical multilayer component according to any of the preceding claims, wherein the internal electrodes (3, GND) have areas of different sizes.

7. Electrical multilayer component according to any of the preceding claims, wherein the internal electrodes (3, GND) are embodied with different widths.

8. Electrical multilayer component according to any of the preceding claims, wherein at least one of the internal electrodes (3, GND) is cruciform.

9. Electrical multilayer component according to any of the preceding claims, wherein at least one of the internal electrodes (3, GND) is a ground electrode (GND).

10. Electrical multilayer component according to any of the preceding claims, wherein the external contact (4, 4a to 4i) comprises a metallization strip.

11. Electrical multilayer component according to any of the preceding claims, wherein the ceramic main body (2) has a plurality of external contacts (4, 4a to 4i) each of which is connected to an end of at least one internal electrode (3, GND).

12. Electrical multilayer component according to any of the preceding claims, which is a ceramic multilayer capacitor.

13. Electrical multilayer component according to any of Claims 1 to 11, which is a multilayer varistor.

14. Electrical multilayer component module (1') comprising a plurality of electrical multilayer components (1) according to any of the preceding claims which are arranged alongside one another in a common ceramic main body (2).

15. Electrical multilayer component module according to Claim 14, wherein the internal electrodes (3, GND) form a plurality of separate internal electrode stacks which are contacted in each case with an external contact (4, 4a to 4i) applied to the main body (2).

## Revendications

1. Composant électrique multicouche (1) avec plusieurs électrodes intérieures (3, GND), qui forment des capacités, dans lequel au moins une électrode intérieure comporte une limitation transversale (QB), qui se trouve en projection orthogonale dans un évidement d'une électrode intérieure voisine, l'évidement de l'électrode intérieure voisine étant un trou et les électrodes intérieures étant en contact au moins à une extrémité avec un contact extérieur (4, 4a à 4i) disposé sur le corps de base céramique, **caractérisé en ce que** l'électrode intérieure (3) comporte au moins deux trous (3a), qui forment la limitation transversale (QB), l'électrode intérieure voisine (3a) comporte au moins deux trous (3a) et chacun des trous (3a) de l'électrode intérieure (3) chevauche un des trous (3a) de l'électrode intérieure voisine (3).

2. Composant électrique multicouche selon la revendication 1 dans lequel le trou est rectangulaire.

3. Composant électrique multicouche selon l'une quelconque des revendications 1 ou 2, dans lequel la limitation transversale (QB) est l'extrémité d'au moins une électrode intérieure (3, GND), tournée vers l'espace intérieur du corps de base céramique (2).

4. Composant électrique multicouche selon l'une quelconque des revendications 1 ou 2, dans lequel la limitation transversale (QB) est formée par au moins un évidement (3a, 3b, GNDa) d'au moins une électrode intérieure.

5. Composant électrique multicouche selon la revendication 4, dans lequel en tant que limitation transversale (QB) l'au moins un évidement (3a, 3b, GNDa) est exécuté comme rétrécissement (3b) d'au moins une électrode intérieure (3, GND).

6. Composant électrique multicouche selon l'une quelconque des revendications précédentes, dans lequel les électrodes intérieures (3, GND) comportent des surfaces de tailles différentes.

7. Composant électrique multicouche selon l'une quelconque des revendications précédentes, dans lequel les électrodes intérieures (3, GND) sont exécutées de largeurs différentes.

8. Composant électrique multicouche selon l'une quelconque des revendications précédentes, dans lequel au moins une des électrodes intérieures (3, GND) est cruciforme.

9. Composant électrique multicouche selon l'une quelconque des revendications précédentes, dans lequel au moins une des électrodes intérieures (3, GND) est une électrode de masse (GND).

10. Composant électrique multicouche selon l'une quelconque des revendications précédentes, dans lequel le contact extérieur (4, 4a à 4i) comporte une bande de métallisation.

11. Composant électrique multicouche selon l'une quelconque des revendications précédentes, dans lequel le corps de base céramique (2) comporte plusieurs contacts extérieurs (4, 4a à 4i), qui sont reliés respectivement à une extrémité d'au moins une électrode intérieure (3, GND).

12. Composant électrique multicouche selon l'une quelconque des revendications précédentes, qui est un condensateur céramique multicouche.

13. Composant électrique multicouche selon l'une quelconque des revendications 1 à 11, qui est une varistance multicouche.

14. Module électrique de composants multicouches (1'), qui comprend plusieurs composants électriques multicouches (1) selon l'une quelconque des revendications précédentes, qui sont disposés les uns à côté des autres dans un corps de base céramique commun (2).

15. Module électrique de composants multicouches selon la revendication 14, dans lequel les électrodes intérieures (3, GND) forment plusieurs piles d'électrodes intérieures séparées, qui sont en contact respectivement avec un contact extérieur (4, 4a à 4i) disposé sur le corps de base (2).
